# EUROPÄISCHE PATENTSCHRIFT

(11) **EP 4 498 654 B1**
(45) Veröffentlichungstag und Bekanntmachung des Hinweises auf die Patenterteilung: **29.04.2026**
(21) Anmeldenummer: 24190231.1
(22) Anmeldetag: 23.07.2024
(51) Int. Cl.: H04L 45/24, H04L 65/403, H04M 3/56

(54) **KOMMUNIKATIONSSYSTEM**
COMMUNICATION SYSTEM
SYSTÈME DE COMMUNICATION

(30) Priorität: 28.07.2023 AT 506092023
(43) Veröffentlichungstag der Anmeldung: 29.01.2025
(73) Patentinhaber: Frequentis AG, 1100 Wien (AT)
(72) Erfinder: SZABO, Ernst, 1140 Wien (AT)
(74) Vertreter: Wildhack & Jellinek Patentanwälte GmbH

(56) Entgegenhaltungen:
- EP-A1- 2 913 946
- JP-A- 2013 126 164

## Beschreibung

Die Erfindung betrifft ein Kommunikationssystem und ein Verfahren zur Übertragung von Audiosignalen und weiteren Signalen wie PTT- und SQU-Signalen zwischen zwei oder mehr Teilnehmereinheiten über zumindest eine erste Übertragungskette und eine zweite Übertragungskette gemäß Patentanspruch 1 bzw. Patentanspruch 8.

Aus dem Stand der Technik sind Kommunikationssysteme bekannt, bei denen die Übertragung von Audiosignalen und zugehöriger Signalisierungen (z.B. PTT (Push-to-Talk)- und SQU (Squelch)-Signale) zwischen zwei oder mehr Kommunikationsteilnehmern unabhängig davon, ob es sich um Funk- oder Telefongespräche handelt, durch eine mehrstufige Übertragungskette zwischen den einzelnen Kommunikationspartnern realisiert ist, wobei diese Übertragungskette aus mehreren Verarbeitungseinheiten und entsprechenden Verbindungen besteht. Bei praktischen Realisierungen können die Audiosignale von mehreren Teilnehmern über die einzelnen Verarbeitungseinheiten und z.B. ein breitbandiges Übertragungsmedium (z.B. PCM-Highways oder Gigabit-Ethernet) zu den anderen Verarbeitungseinheiten übertragen werden.

Um die Verfügbarkeit der Übertragung von Audiosignalen und die Funktionen eines Kommunikationssystems zu erhöhen, können (mehrfach-)redundante Übertragungsketten realisiert werden, um zu vermeiden, dass sich Fehler in einer Übertragungskette auf die Funktion oder die Übertragung von Audiosignalen im Kommunikationssystem auswirken. Bei redundant ausgelegten Kommunikationssystemen existieren daher zwei oder mehr Übertragungsketten, in denen die Audiosignale gleichzeitig übertragen und verarbeitet werden. Bei redundant ausgelegten Kommunikationssystemen muss das Audiosignal, das vom empfangenden Teilnehmer ausgegeben wird, aus mehreren Verarbeitungseinheiten der redundanten Übertragungsketten ausgewählt werden.

Für den Fall, dass in einer Verarbeitungseinheit ein Fehler auftritt oder eine Verbindung zwischen einer Verarbeitungseinheit und einer Teilnehmereinheit fehlerhaft ist, muss bei derartigen redundanten Übertragungsketten eine Entscheidung getroffen werden, welches Audiosignal an den Benutzer ausgegeben werden soll.

Bei bekannten Kommunikationssystemen wird die Entscheidung, welches der Audiosignale der redundanten Übertragungsketten als das Ausgangssignal einer Teilnehmereinheit verwendet wird, in jeder empfangenden Teilnehmereinheit autonom getroffen und die Umschaltungen zwischen den Übertragungsketten erfolgt bei den empfangenden Teilnehmereinheiten. Dazu müssen die Fehlerzustände aller Komponenten der gesamten Übertragungsketten und der zugehörigen Verbindungen bei der empfangenden Teilnehmereinheit bekannt sein.

Nachteilig an dieser bekannten Implementierung ist zunächst, dass die Übertragung von Fehlerzuständen problematisch sein kann, da die Anbindungen der Teilnehmereinheiten an die Übertragungseinheiten zumeist mit niedrigerer Bandbreite erfolgen und alle Fehlerzustände der gesamten Übertragungskette an die empfangenden Teilnehmereinheiten übertragen werden müssen.

Weiters trifft jede empfangende Teilnehmereinheit eine eigenständige Entscheidung für die Auswahl des Audiosignals einer Übertragungskette. Dies bedeutet auch, dass der Zeitpunkt der Entscheidung und damit der Zeitpunkt der Umschaltung bei jeder Teilnehmereinheit geringfügig unterschiedlich sein können. Dadurch ist auch die Dauer eines Ausfalls des Audiosignals bei unterschiedlichen Teilnehmereinheiten einer gewissen Streuung unterworfen.

Um bei einem Fehlerzustand in der Übertragungskette die Ausfallszeit des Audioausgangssignals bei einer empfangenden Teilnehmereinheit so kurz wie möglich halten zu können, ist ein schneller Übertragungsmechanismus der Fehlerinformationen bzw. der Statusinformationen zwischen allen Komponenten einer Übertragungskette notwendig.

Bei mehreren, unterschiedlichen Fehlerzuständen in den redundanten Audioübertragungsketten können bei dieser Anordnung alleine durch eine Umschaltung unter Umständen nicht alle Fehlerzustände kompensiert werden.

Bei Kommunikationssystemen mit einer zusätzlichen Verarbeitungseinheit z.B. zur Berechnung von Audiokonferenzen mit mehreren Teilnehmern können die Konferenzeinheiten bei unterschiedlichen Fehlern in den redundanten Übertragungsketten unterschiedliche Konferenzsignale liefern. Dies bedeutet, dass durch eine Umschaltung in einer Teilnehmereinheit von dem Audiosignal einer Übertragungskette auf das Audiosignal der anderen Übertragungskette andere Teilnehmer im Konferenzsignal fehlen können.

Aufgabe der Erfindung ist es daher, diesbezüglich Abhilfe zu schaffen und ein Kommunikationssystem und ein Verfahren zur Übertragung von Audiosignalen bereitzustellen, die die zuvor genannten Nachteile ausräumen.

Die Erfindung löst diese Aufgabe mit einem Kommunikationssystem zur Übertragung von Audiosignalen und gegebenenfalls weiteren Signalen wie Push-to-Talk (PTT)- und/oder Squelch (SQU)-Signalen zwischen zwei oder mehr Teilnehmereinheiten über zumindest eine erste Übertragungskette und eine zweite Übertragungskette
- wobei an jeder Teilnehmereinheit zu übertragende Audiosignale und gegebenenfalls weitere Signale, insbesondere PTT- und SQU-Signale, eingebbar und empfangene Audiosignale abgebbar sind,
- wobei jede Übertragungskette jeweils zumindest eine teilnehmerseitige Verarbeitungseinheit und gegebenenfalls zumindest eine weitere Verarbeitungseinheit umfasst,
- wobei jede teilnehmerseitige Verarbeitungseinheit jeweils mit zumindest einer Teilnehmereinheit verbunden ist,
- wobei jede Teilnehmereinheit mit einer teilnehmerseitigen Verarbeitungseinheit der ersten Übertragungskette und einer teilnehmerseitigen Verarbeitungseinheit der zweiten Übertragungskette verbunden ist,
- wobei die teilnehmerseitigen Verarbeitungseinheiten einer jeweiligen Übertragungskette miteinander über einen Breitband-Übertragungspfad und/oder mit einer weiteren Verarbeitungseinheit der jeweiligen Übertragungskette, verbunden sind,
gemäß Patentanspruch 1.

Erfindungsgemäß ist dabei vorgesehen,
- dass zumindest eine teilnehmerseitige Verarbeitungseinheit und/oder zumindest eine weitere Verarbeitungseinheit der ersten Übertragungskette mit zumindest einer teilnehmerseitigen Verarbeitungseinheit oder zumindest einer weiterer Verarbeitungseinheit der zweiten Übertragungskette über zumindest einen Breitband-Übertragungsinterlink miteinander verbunden sind,
   wobei über den Breitband-Übertragungsinterlink Audiosignale und gegebenenfalls weitere Signale aus der ersten Übertragungskette an die zweite Übertragungskette oder aus der zweiten Übertragungskette an die erste Übertragungskette weiterleitbar sind, und
   - dass diese zumindest eine, einen Breitband-Übertragungsinterlink aufweisende, teilnehmerseitige Verarbeitungseinheit und/oder diese zumindest eine, einen Breitband-Übertragungsinterlink aufweisende, weitere Verarbeitungseinheit jeder der Übertragungsketten, jeweils Folgendes umfasst:
      ▪ eine Umschalteinheit, wobei die Umschalteinheit jeweils
         - mit dem Breitband-Übertragungspfad der jeweiligen Übertragungskette und dem zumindest einen Breitband-Übertragungsinterlink verbunden ist und
         - dazu ausgebildet ist, zwischen dem Breitband-Übertragungspfad der jeweiligen Übertragungskette und dem Breitband-Übertragungsinterlink zur Übertragung von Audiosignalen und gegebenenfalls weiteren Signalen aus der jeweils anderen Übertragungskette umzuschalten,
      ▪ eine mit der Umschalteinheit verbundene Fehlererkennungseinheit,
         wobei die Fehlererkennungseinheit der ersten Übertragungskette dazu ausgebildet ist,
            - zu überprüfen, ob an einer Teilnehmereinheit eingegebene Audiosignale und gegebenenfalls weitere Signale, insbesondere PTT- und SQU-Signale, über den Breitband-Übertragungspfad der ersten Übertragungskette übertragen werden, und
            - bei fehlender Übertragung der eingegebenen Audiosignale und gegebenenfalls weiteren Signale über den Breitband-Übertragungspfad der ersten Übertragungskette, die Umschalteinheit zum Umschalten von dem Breitband-Übertragungspfad der ersten Übertragungskette auf den Breitband-Übertragungsinterlink zur Übertragung von Audiosignalen und gegebenenfalls weiteren Signalen aus der zweiten Übertragungskette anzusteuern, und
         wobei die Fehlererkennungseinheit der zweiten Übertragungskette dazu ausgebildet ist,
            - zu überprüfen, ob an einer Teilnehmereinheit eingegebene Audiosignale und gegebenenfalls weitere Signale, insbesondere PTT- und SQU-Signale, über den Breitband-Übertragungspfad der zweiten Übertragungskette übertragen werden, und
            - bei fehlender Übertragung der eingegebenen Audiosignale und gegebenenfalls weiteren Signale über den Breitband-Übertragungspfad der zweiten Übertragungskette, die Umschalteinheit zum Umschalten von dem Breitband-Übertragungspfad der zweiten Übertragungskette auf den Breitband-Übertragungsinterlink zur Übertragung vonAudiosignalen und gegebenenfalls weiteren Signalen aus der ersten Übertragungskette anzusteuern und
      ▪ eine Audioverarbeitungseinheit, wobei die Audioverarbeitungseinheit der Umschalteinheit nachgeschaltet ist, sodass der Audioverarbeitungseinheit die von der Umschalteinheit ausgewählten Audiosignale zuführbar sind.

Bei einem erfindungsgemäßen Kommunikationssystem können vorteilhafterweise Audiosignale zwischen den redundanten Übertragungsketten ausgetauscht werden, wodurch in einer Übertragungskette fehlende Audiosignale durch die Audiosignale der jeweils anderen Übertragungskette ersetzt werden können.

Erfindungsgemäß ist vorgesehen, dass zumindest eine teilnehmerseitige Verarbeitungseinheit jeder Übertragungskette bzw. zumindest eine weitere Verarbeitungseinheit einer Übertragungskette, sofern diese vorhanden ist, über einen Breitband-Übertragungspfad mit einer oder mehreren (anderen) teilnehmerseitigen Verarbeitungseinheiten einer Übertragungskette verbunden ist und über einen Breitband-Übertragungsinterlink zu einer anderen Übertragungskette, eine Umschalteinheit, eine Fehlererkennungseinheit und eine Audioverarbeitungseinheit verfügt. Ansonsten kann die betreffende teilnehmerseitige oder weitere Verarbeitungseinheit beliebig ausgestaltet sein, mit Teilnehmereinheiten verbunden sein oder über keine Verbindung zu Teilnehmereinheit verfügen.

Wenn in einer Fehlererkennungseinheit der teilnehmerseitigen bzw. weiteren Verarbeitungseinheit einer Übertragungskette festgestellt wird, dass auf Grund von Fehlern in der Übertragungskette Audiosignale fehlen, so können diese Fehler dadurch kompensiert werden, dass die Audiosignale der jeweils anderen Übertragungskette verwendet werden. Dies geschieht vorteilhafterweise automatisch und ohne Zutun der Teilnehmer bzw. der Teilnehmereinheiten, mit denen die Teilnehmer verbunden sind.

Dafür sind zusätzliche Verbindungen in Form von zumindest einem Breitband-Übertragungsinterlink, z.B. PCM-Highway, zwischen zumindest einer teilnehmerseitigen bzw. gegebenenfalls zumindest einer weiteren Verarbeitungseinheit bzw. den Umschalteinheiten der jeweiligen teilnehmerseitigen bzw. gegebenenfalls weiteren Verarbeitungseinheit vorgesehen. Über diese zusätzliche Verbindung können die fehlenden Audiosignale des Breitband-Übertragungspfads, z.B. PCM-Highways, der jeweils anderen Übertragungskette übertragen werden.

Unter einer Übertragungskette wird im Zusammenhang mit der Erfindung die Gesamtheit aller Elemente eines Kommunikationssystems verstanden, in der die Übertragung und die Verarbeitung von Audiosignalen zwischen dem sendenden Teilnehmer und dem empfangenden Teilnehmer erfolgt. Bei einem erfindungsgemäßen, redundant ausgelegten, Kommunikationssystem existieren daher zwei oder mehr Übertragungsketten, in denen die Audiosignale gleichzeitig übertragen und verarbeitet werden.

Unter einer Verarbeitungseinheit wird im Zusammenhang mit der Erfindung ein Element einer Übertragungskette verstanden, das einerseits die Audiosignale von den Teilnehmereinheiten empfängt und an diese sendet und das andererseits an einen Breitband-Übertragungspfad (z.B. PCM-Highway) angeschlossen ist. Die Anbindung an den Breitband-Übertragungspfad kann mit hoher Bandbreite erfolgen, während die Anbindung an die Teilnehmereinheiten mit niedriger Bandbreite erfolgen kann. In der Verarbeitungseinheit ist auch eine Audioverarbeitungseinheit zur Verarbeitung der übertragenen Audiosignale umfasst.

Unter einer Audioverarbeitungseinheit wird in diesem Zusammenhang eine Einheit verstanden, die die übertragenen Audiosignale im Sinne der Funktion des Kommunikationssystem verarbeitet (z.B. Berechnung von Audiokonferenzen) und für die Verteilung an andere Verarbeitungseinheiten zur Verfügung stellt.

Unter einer Teilnehmereinheit wird im Zusammenhang mit der Erfindung ein Element einer Übertragungskette verstanden, das die von einem Teilnehmer eingegebenen (Audio-)Signale an die (redundanten) Verarbeitungseinheiten überträgt bzw. von diesen empfängt. Unter einem Teilnehmer wird dabei ein Nutzer des Kommunikationssystems verstanden.

Unter einem Breitband-Übertragungspfad bzw. einem Breiband- Übertragungsinterlink wird im Zusammenhang mit der Erfindung ein breitbandiges Übertragungsmedium (z.B. PCM-Highways oder Gigabit-Ethernet) verstanden, über das eine Vielzahl von Signalen (Audiosignale und deren Signalisierungen) an Verarbeitungseinheiten übertragen werden können. Unter einem PCM-Highway wird im Zusammenhang mit der Erfindung ein Übertragungsmedium für ein gleichzeitige Übertragung von vielen unterschiedlichen Audiosignalen verstanden, deren Abtastwerte entsprechend der Pulse-Code-Modulation festgelegt sind (z.B. entsprechend dem ITU-Standard G.703).

Die Erfindung löst die zuvor genannte Aufgabe weiters mit einem erfindungsgemäßen Verfahren zur Übertragung von Audiosignalen und gegebenenfalls weiteren Signalen, insbesondere PTT- und/oder SQU-Signalen, zwischen zwei oder mehr Teilnehmereinheiten über zumindest eine erste Übertragungskette und eine zweite Übertragungskette, mit einem erfindungsgemäßen Kommunikationssystem gemäß Patentanspruch 1.

Dabei ist vorgesehen
- dass an jeder Teilnehmereinheit an zumindest eine andere Teilnehmereinheit zu übertragende Audiosignale und gegebenenfalls weitere Signale, insbesondere PTT- und SQU-Signale, eingebbar und von der zumindest einen anderen Teilnehmereinheit empfangene Audiosignale abgebbar sind,
- dass Audiosignale innerhalb einer jeweiligen Übertragungskette über einen Breitband-Übertragungspfad, insbesondere jeweils über einen PCM-Highway, übertragbar sind, und
- dass Audiosignale zwischen der ersten Übertragungskette und der zweiten Übertragungskette über zumindest einen Breitband-Übertragungsinterlink übertragbar sind,
sowie folgende Verfahrensschritte:
- Eingabe von Audiosignalen und gegebenenfalls weiteren Signalen an einer Teilnehmereinheit zur Übertragung über die erste Übertragungskette und über die zweite Übertragungskette,
- Übertragen von an der Teilnehmereinheit eingegebenen Audiosignalen und gegebenenfalls weiteren Signalen über die erste Übertragungskette an zumindest eine weitere Teilnehmereinheit,
- Überprüfen, ob die an der Teilnehmereinheit eingegebenen Audiosignale und gegebenenfalls weitere Signale über den Breitband-Übertragungspfad der ersten Übertragungskette übertragen werden, und
- bei fehlender Übertragung der eingegebenen Audiosignale und gegebenenfalls weiteren Signale über den Breitband-Übertragungspfad der ersten Übertragungskette, Umschalten von dem Breitband-Übertragungspfad der ersten Übertragungskette auf den Breitband-Übertragungsinterlink zur Übertragung von Audiosignalen und gegebenenfalls weiteren Signalen aus der zweiten Übertragungskette und Übertragen von Audiosignalen und gegebenenfalls weiteren Signalen aus der zweiten Übertragungskette.

Dadurch, dass bei fehlender Übertragung jedes einzelnen eingegebenen Audiosignale über eine jeweilige Übertragungskette von dem Breitband-Übertragungspfad der betreffenden Übertragungskette auf den Breitband-Übertragungsinterlink zur Übertragung von Audiosignalen aus der jeweils anderen Übertragungskette umgeschaltet wird und Audiosignale aus der jeweils anderen Übertragungskette übertragen werden, können in einer Übertragungskette fehlende Audiosignale rasch und zuverlässig durch die Audiosignale der jeweils anderen Übertragungskette ersetzt werden.

Weitere vorteilhafte Ausführungsvarianten eines erfindungsgemäßen Kommunikationssystems bzw. eines erfindungsgemäßen Verfahrens sind in den abhängigen Ansprüchen beschrieben.

Gemäß einer weiteren vorteilhaften Variante eines erfindungsgemäßen Verfahrens kann vorgesehen sein,
- dass an einer Teilnehmereinheit eingegebene Audiosignale und gegebenenfalls weitere Signale, insbesondere PTT- und SQU-Signale, über die zweite Übertragungskette an zumindest eine weitere Teilnehmereinheit übertragen werden,
- dass überprüft wird, ob die an der Teilnehmereinheit eingegebenen Audiosignale und gegebenenfalls weitere Signale über den Breitband-Übertragungspfad der zweiten Übertragungskette übertragen werden, und
- dass bei fehlender Übertragung der eingegebenen Audiosignale und gegebenenfalls weiteren Signale über den Breitband-Übertragungspfad der zweiten Übertragungskette, von dem Breitband-Übertragungspfad der zweiten Übertragungskette auf den Breitband-Übertragungsinterlink zur Übertragung von Audiosignalen und gegebenenfalls weiteren Signale aus der ersten Übertragungskette umgeschaltet wird und Audiosignale und gegebenenfalls weitere Signale aus der ersten Übertragungskette übertragen werden.

Um einen besonders flexiblen Wechsel für jedes einzelne Audiosignal zwischen den Übertragungsketten zu ermöglichen, kann bei einem erfindungsgemäßen Kommunikationssystem:
dass die Fehlererkennungseinheit der ersten Übertragungskette dazu ausgebildet ist,
   - nach der Umschaltung vom Breitband-Übertragungspfad der ersten Übertragungskette auf den Breitband-Übertragungsinterlink zur Übertragung von, insbesondere einzelnen, Audiosignalen und gegebenenfalls weiteren Signalen, insbesondere PTT- und SQU-Signalen, aus der zweiten Übertragungskette zu überprüfen, ob wieder über den Breitband-Übertragungspfad der ersten Übertragungskette (A) an einer Teilnehmereinheit eingegebene Audiosignale und gegebenenfalls weitere Signale übertragen werden,
      und
   - bei vorhandener Übertragung von eingegebenen Audiosignalen und gegebenenfalls weiteren Signalen über den Breitband-Übertragungspfad der ersten Übertragungskette, die Umschalteinheit der ersten Übertragungskette zum Umschalten von dem Breitband-Übertragungsinterlink zur Übertragung von Audiosignalen und gegebenenfalls weiteren Signalen aus der zweiten Übertragungskette auf den Breitband-Übertragungspfad (3A) der ersten Übertragungskette anzusteuern und
dass die Fehlererkennungseinheit der zweiten Übertragungskette dazu ausgebildet ist,
   - nach der Umschaltung vom Breitband-Übertragungspfad der zweiten Übertragungskette auf den Breitband-Übertragungsinterlink zur Übertragung von, insbesondere einzelnen, Audiosignalen und gegebenenfalls weiteren Signalen, insbesondere PTT- und SQU-Signalen aus der ersten Übertragungskette zu überprüfen, ob wieder über den Breitband-Übertragungspfad der zweiten Übertragungskette an einer Teilnehmereinheit eingegebene Audiosignale und gegebenenfalls weitere Signale übertragen werden,
      und
   - bei vorhandener Übertragung von eingegebenen Audiosignalen und gegebenenfalls weiteren Signalen über den Breitband-Übertragungspfad der zweiten Übertragungskette, die Umschalteinheit der zweiten Übertragungskette zum Umschalten von dem Breitband-Übertragungsinterlink zur Übertragung von Audiosignalen und gegebenenfalls weiteren Signale aus der ersten Übertragungskette auf den Breitband-Übertragungspfad der zweiten Übertragungskette anzusteuern.

In diesem Zusammenhang kann bei einem erfindungsgemäßen Verfahren vorgesehen sein:
- dass nach der Umschaltung vom Breitband-Übertragungspfad der ersten Übertragungskette auf den Breitband-Übertragungsinterlink zur Übertragung von Audiosignalen und gegebenenfalls weiteren Signalen, insbesondere PTT- und SQU-Signalen, aus der zweiten Übertragungskette überprüft wird, ob wieder über den Breitband-Übertragungspfad der ersten Übertragungskette an einer Teilnehmereinheit eingegebene Audiosignale und gegebenenfalls weitere Signale übertragen werden, und
- dass bei vorhandener Übertragung von eingegebenen Audiosignalen und gegebenenfalls weiteren Signalen über den Breitband-Übertragungspfad der ersten Übertragungskette, von dem Breitband-Übertragungsinterlink zur Übertragung von Audiosignalen und gegebenenfalls weiteren Signalen aus der zweiten Übertragungskette auf den Breitband-Übertragungspfad der ersten Übertragungskette umgeschaltet wird,
   und/oder
- dass nach der Umschaltung vom Breitband-Übertragungspfad der zweiten Übertragungskette auf den Breitband-Übertragungsinterlink zur Übertragung von Audiosignalen und gegebenenfalls weiteren Signalen, insbesondere PTT- und SQU-Signalen, aus der ersten Übertragungskette (A) überprüft wird, ob wieder über den Breitband-Übertragungspfad der zweiten Übertragungskette an einer Teilnehmereinheit eingegebene Audiosignale und gegebenenfalls weitere Signale übertragen werden, und
- dass bei vorhandener Übertragung von eingegebenen Audiosignalen und gegebenenfalls weiteren Signalen über den Breitband-Übertragungspfad der zweiten Übertragungskette, von dem Breitband-Übertragungsinterlink zur Übertragung von Audiosignalen und gegebenenfalls weiteren Signalen aus der ersten Übertragungskette auf den Breitband-Übertragungspfad der zweiten Übertragungskette umgeschaltet wird.

Gemäß einer vorteilhaften Variante eines erfindungsgemäßen Kommunikationssystems kann vorgesehen sein, dass zumindest eine teilnehmerseitige Verarbeitungseinheit und/oder zumindest eine weitere Verarbeitungseinheit der ersten Übertragungskette mit zumindest einer teilnehmerseitigen Verarbeitungseinheit und/oder zumindest einer weiterer Verarbeitungseinheit der zweiten Übertragungskette über einen ersten Breitband-Übertragungsinterlink und einen zweiten Breitband-Übertragungsinterlink miteinander verbunden sind,
- wobei über den ersten Breitband-Übertragungsinterlink Audiosignale und gegebenenfalls weitere Signale, insbesondere PTT- und SQU-Signale, aus der ersten Übertragungskette an die zweite Übertragungskette weiterleitbar sind, und
- wobei über den zweiten Breitband-Übertragungsinterlink Audiosignale und gegebenenfalls weitere Signale, insbesondere PTT- und SQU-Signale, aus der zweiten Übertragungskette an die erste Übertragungskette weiterleitbar sind.

Um mit einem erfindungsgemäßen Kommunikationssystem besonders effizient Audiokonferenzen erstellen zu können, kann vorgesehen sein, dass zumindest eine Übertragungskette des Kommunikationssystems eine weitere Verarbeitungseinheit aufweist, wobei die weitere Verarbeitungseinheit jeweils keine Verbindungen zu Teilnehmereinheiten aufweist und
wobei insbesondere vorgesehen ist,
- dass die weitere Verarbeitungseinheit zumindest einen Breitband-Übertragungsinterlink aufweist und
- dass die teilnehmerseitigen Verarbeitungseinheit einer jeweiligen Übertragungskette jeweils mit der weiteren Verarbeitungseinheit verbunden sind.

Um beispielsweise auch die Teilnehmer, die Audiosignale an den Teilnehmereinheiten eingeben, darüber zu informieren, dass eine Übertragungskette fehlerhaft ist, sodass die Teilnehmer Signale gezielt in an eine andere Übertragungskette abgeben können, kann vorgesehen sein, sein,
- dass die Fehlererkennungseinheit jeweils dazu ausgebildet ist, bei fehlender Übertragung der eingegebenen Audiosignale und gegebenenfalls weitere Signale, insbesondere PTT- und SQU-Signale, über die jeweilige Übertragungskette eine Fehlerinformation an die zumindest eine, einen Breitband-Übertragungsinterlink aufweisende, teilnehmerseitige Verarbeitungseinheit der jeweiligen Audioübertragungskette und/oder die zumindest eine, einen Breitband-Übertragungsinterlink aufweisende, weitere Verarbeitungseinheit der jeweils anderen Übertragungskette, zu übermitteln, bzw,
- dass bei fehlender Übertragung der eingegebenen Audiosignale und gegebenenfalls weitere Signale, insbesondere PTT- und SQU-Signale, über den Breitband-Übertragungspfad der jeweiligen Übertragungskette eine Fehlerinformation an die Teilnehmereinheit, an der Audiosignale und gegebenenfalls weitere Signale eingegeben werden und/oder die zumindest eine weitere Teilnehmereinheit übermittelt wird.

Um die zur Verfügung stehende Bandbreite bzw. die verfügbaren Übertragungskapazitäten bestmöglich nutzen zu können, kann vorgesehen sein,
- dass über einen ersten Breitband-Übertragungsinterlink und/oder einen zweiten Breitband-Übertragungsinterlink jeweils
- alle Audiosignale des jeweiligen Breitband-Übertragungspfads und/oder
- ausgewählte Audiosignale des jeweiligen Breitband-Übertragungspfads übertragbar sind,

wobei insbesondere vorgesehen ist, dass zur Auswahl der zu übertragenden Audiosignale ein Kommunikationsprotokoll in der jeweiligen weiteren Verarbeitungseinheit hinterlegt ist, bzw.
   - dass über den ersten Breitband-Übertragungsinterlink und/oder den zweiten Breitband-Übertragungsinterlink jeweils
   - alle Audiosignale des jeweiligen Breitband-Übertragungspfads oder
   - ausgewählte Audiosignale des jeweiligen Breitband-Übertragungspfads übertragen werden,
wobei insbesondere vorgesehen ist, dass ein vorgegebenes Kommunikationsprotokoll zur Auswahl der zu übertragenden Audiosignale herangezogen wird.

Gemäß einer vorteilhaften Variante eines erfindungsgemäßen Kommunikationssystems, das besonders große Bandbreiten von Signalen zur Verfügung stellt, kann vorgesehen sein, dass der zumindest eine Breitband-Übertragungsinterlink, der erste Breitband-Übertragungsinterlink, der zweite Breitband-Übertragungsinterlink, der Breitband-Übertragungspfad der ersten Übertragungskette und/oder der Breitband-Übertragungspfad der zweiten Übertragungskette jeweils als PCM-Highway ausgebildet ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen schematisch:
Fig. 1 ein erstes Ausführungsbeispiel eines bekannten nicht redundanten Kommunikationssystems,
Fig. 2 die Übertragungskette für Audiosignale zwischen zwei Teilnehmern im Ausführungsbeispiel in Fig. 1,
Fig. 3 ein zweites Ausführungsbeispiel eines bekannten Kommunikationssystems mit einer zusätzlichen Verarbeitungseinheit, an der keine Teilnehmer angeschlossen sind,
Fig. 4 eine drittes Ausführungsbeispiel eines bekannten Kommunikationssystems, das redundant aufgebaut ist,
Fig. 5 die Übertragungskette für Audiosignale zwischen zwei Teilnehmern im Ausführungsbeispiel in Fig. 4,
Fig. 6 die Auswahl des Ausgangssignals an der empfangenden Teilnehmereinheit in dem redundant aufgebauten Kommunikationssystem mit einer zweistufigen Audioübertragungskette aus Fig. 4,
Fig. 7 ein Ausführungsbeispiel eines erfindungsgemäßen, redundant aufgebauten Kommunikationssystems,
Fig. 8 die Übertragungskette für Audiosignale zwischen zwei Teilnehmern beim erfindungsgemäßen Ausführungsbeispiel in Fig. 7,
Fig. 9 die Auswahl des Ausgangssignals an der empfangenden Teilnehmereinheit beim erfindungsgemäßen Kommunikationssystem aus Fig. 7,
Fig. 10 ein weiteres Ausführungsbeispiel eines erfindungsgemäßen, redundant aufgebauten Kommunikationssystems.

### Bekannte Kommunikationssysteme

Im Folgenden werden zunächst der Aufbau und die Funktionsweise bekannter Kommunikationssysteme anhand von drei Ausführungsbeispielen näher erläutert.

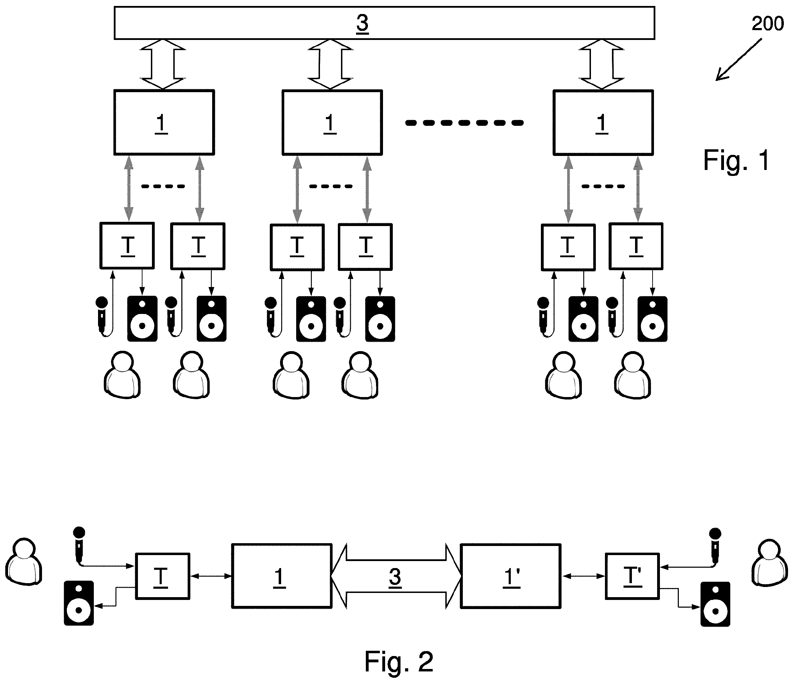

Fig. 1 zeigt ein erstes Ausführungsbeispiel eines bekannten, nicht redundanten, Kommunikationssystems 200 bestehend aus mehreren Verarbeitungseinheiten 1, die eine zweistufige Audioübertragungskette darstellen, wobei die einzelnen Verarbeitungseinheiten 1 über einen Breitband-Übertragungspfad, d.h. ein breitbandiges Übertragungsmedium 3, z.B. einen PCM-Highway, miteinander verbunden sind.

Die einzelnen Teilnehmereinheiten T sind typischerweise über Verbindungen mit niedrigerer Bandbreite an die Verarbeitungseinheiten 1 angebunden, wobei mehrere Teilnehmereinheiten T an eine Verarbeitungseinheit 2 angeschlossen sein können.

Jede Teilnehmereinheit T ist zumeist zumindest mit einem Mikrofon zur Eingabe von zu übertragenden Audiosignalen und zumindest einem Lautsprecher oder Kopfhörer zur Abgabe von empfangenen Audiosignalen ausgestattet. Zusätzlich können noch Bediengeräte zur Aktivierung der Signalisierung, wie z.B. eine PTT-Taste oder zur Anzeige eines Signalempfangs angeschlossen sein.

Für die Übertragung eines Mikrofonsignals von einer Teilnehmereinheit T zum Lautsprecher oder zum Kopfhörer einer anderen Teilnehmereinheit T' ergibt sich eine Übertragungskette für die Audiosignale entsprechend Fig. 2. An einer Teilnehmereinheit T über das Mikrofon eingegebene Audiosignale werden zunächst an die angebundene Verarbeitungseinheit 1 und weiter von der Verarbeitungseinheit 1 über das Breitband-Übertragungsmedium 3 an eine weitere Verarbeitungseinheit 1' übertragen. Diese weitere Verarbeitungseinheit 1' übermittelt die Audiosignale einschließlich zugehöriger Signalisierungen wie PTT- oder SQU-Signalen schließlich an die weitere Teilnehmereinheit T', wo die Audiosignale über den Lautsprecher oder Kopfhörer ausgegeben werden. Die Übertragung eines Mikrofonsignals von der Teilnehmereinheit T' zum Lautsprecher oder zum Kopfhörer einer anderen Teilnehmereinheit T erfolgt in die entgegengesetzte Richtung.

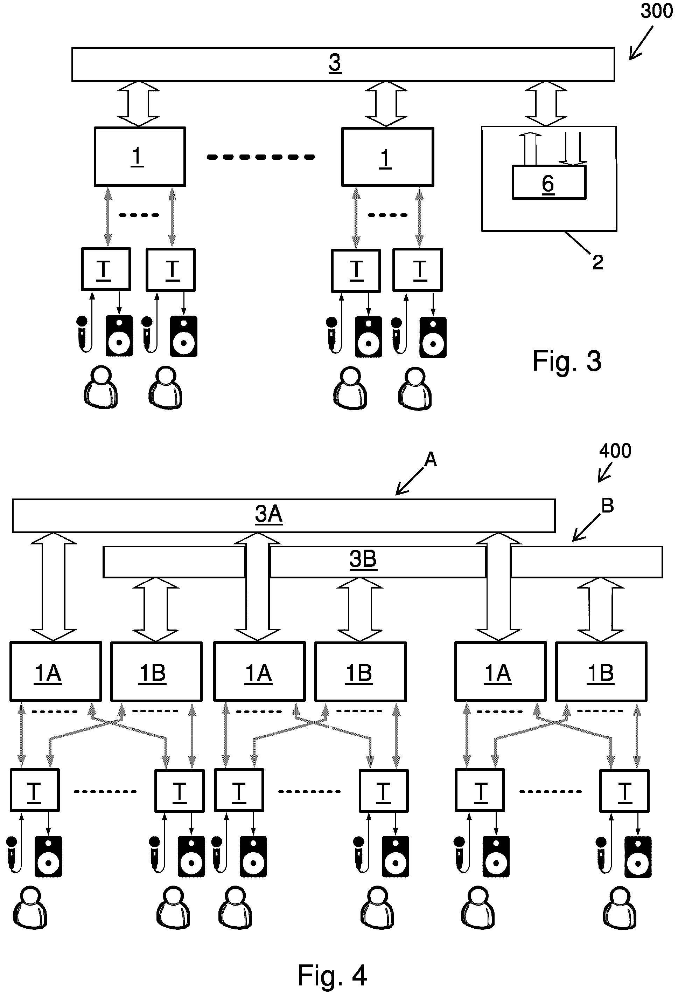

Fig. 3 zeigt exemplarisch ein Ausführungsbeispiel eines weiteren bekannten Kommunikationssystems 300, das prinzipiell denselben Aufbau aufweist wie das bekannte Kommunikationssystem 200 in Fig. 1, jedoch zusätzlich eine weitere Verarbeitungseinheit 2, z.B. eine Konferenzeinheit, aufweist, an der keine Teilnehmereinheiten T angeschlossen sind und die für eine Manipulation der Audiosignale verwendet werden kann, z.B. für eine Konferenzberechnung. Diese Signale werden dann wieder über das Breitband-Übertragungsmedium 3 an eine weitere Verarbeitungseinheit 1' und dann an die Teilnehmereinheiten T' übertragen.

Um die Verfügbarkeit der Übertragung von Signalen und die Funktionen eines Kommunikationssystems zu erhöhen, können ganz generell verschiedene Lösungsansätze gewählt werden, damit sich Fehler im Kommunikationssystem auf dessen Funktion oder die Übertragung von Signalen nicht oder nur geringfügig auswirken.

Eine Möglichkeit ist die Realisierung von (mehrfach-)redundanten Übertragungsketten bzw. Übertragungswegen, wie sie auch in JP 2013126164 A bei einem System zur Übertragung von z.B. Steuerbefehlen an einzelne, gekoppelte Waggons eines Schienenfahrzeugs offenbart sind, um beispielsweise das Öffnen und Schließen von Türen zu veranlassen.

Fig. 4 zeigt ein drittes Ausführungsbeispiel eines bekannten Kommunikationssystems 400, das entsprechend dem Kommunikationssystem 200 in Fig. 1, jedoch als ein redundant aufgebautes Kommunikationssystem mit zwei Übertragungsketten A, B realisiert ist. Damit ist das Kommunikationssystem 400 intern redundant aufgebaut.

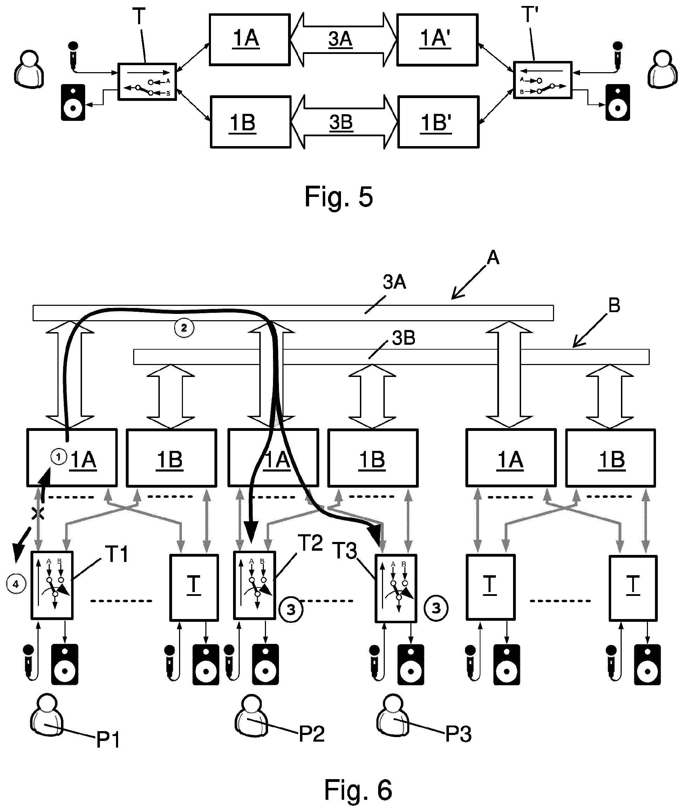

Jede Teilnehmereinheit T sendet ihr Mikrofonsignal in beide Übertragungsketten A, B und die Verarbeitung der Audiosignale einschließlich zugehöriger Signalisierungen wie PTT- oder SQU-Signalen erfolgt parallel in beiden Übertragungsketten A, B in gleicher Art und Weise, wodurch beide Übertragungsketten A, B gleiche Audiosignale an die empfangenden Teilnehmereinheiten T liefern. Die Teilnehmereinheit T wählt bei dieser Implementierung eines der beiden Audiosignale zur Abgabe an den Teilnehmer aus. Dazu verfügen die Teilnehmereinheiten T über eine Umschalteinheit, wie dies in Fig. 5 dargestellt ist.

Fig. 5 zeigt die redundanten Übertragungsketten A, B zwischen zwei Kommunikationspartnern bzw. Teilnehmern beim Ausführungsbeispiel aus Fig. 4. An einer Teilnehmereinheit T werden über das Mikrofon eingegebene Audiosignale zunächst parallel an die angebundenen Verarbeitungseinheiten 1A, 1B und weiter von den Verarbeitungseinheiten 1A, 1B über das jeweilige Breitband-Übertragungsmedium 3A, 3B an diejenige Verarbeitungseinheit 1A', 1B' übertragen, an die der empfangende Teilnehmer T' angebunden ist. Diese weitere Verarbeitungseinheit 1A', 1B' übermittelt die Audiosignale einschließlich zugehöriger Signalisierungen wie PTT- oder SQU-Signalen schließlich an die weitere Teilnehmereinheit T', wo die Audiosignale über den Lautsprecher oder den Kopfhörer ausgegeben werden. Die Übertragung eines Mikrofonsignals von der Teilnehmereinheit T' zum Lautsprecher oder zum Kopfhörer einer anderen Teilnehmereinheit T erfolgt in die entgegengesetzte Richtung.

Dabei müssen für die empfangenen Audiosignale einschließlich zugehöriger Signalisierungen wie PTT- oder SQU-Signalen in den Teilnehmereinheiten T geeignete Maßnahmen implementiert werden, um eine adäquate Auswahl der Audiosignale der redundanten Übertragungskette A, B treffen zu können.

Typischerweise wird nur das Audiosignal einer Übertragungskette A, B für die Ausgabe an den Teilnehmer ausgewählt. Es können aber auch andere Implementierungen realisiert werden, wie beispielsweise eine Summation der Audiosignale aller Übertragungsketten A, B.

Für den Fall, dass in einer Verarbeitungseinheit 1 ein Fehler auftritt oder eine Verbindung zwischen einer Verarbeitungseinheit 1 und der Teilnehmereinheit T fehlerhaft ist, muss die empfangende Teilnehmereinheit T' eine Entscheidung treffen, welches Audiosignal an den Benutzer ausgegeben werden soll.

Dazu muss die empfangende Teilnehmereinheit T' von diesem Fehler informiert werden und auf die jeweils andere vom Fehler nicht betroffene Übertragungskette umschalten. Dies hat eine Unterbrechung des Audiosignals bei der empfangenden Teilnehmereinheit T' zur Folge, wobei die Dauer dieses Ausfalls von
- der Zeit für die Erkennung des Ausfalls durch eine Verarbeitungseinheit in der Übertragungskette,
- der Zeit zur Übertragung dieser Information von dieser Verarbeitungseinheit zur empfangenden Teilnehmereinheit T',
- der Zeit für die Entscheidung einer Umschaltung in der empfangenden Teilnehmereinheit T' und
- der tatsächlichen Umschaltzeit in der empfangenden Teilnehmereinheit T' abhängig ist.

Bei den bekannten Kommunikationssystemen erfolgt die Umschaltung bei den empfangenden Teilnehmereinheiten T'. Bei dieser Implementierung wird die Entscheidung, welches der Audiosignale der redundanten Übertragungsketten A, B als das Ausgangssignal einer Teilnehmereinheit T' verwendet wird, in jeder empfangenden Teilnehmereinheit T' autonom getroffen. Dazu müssen die Fehlerzustände aller Komponenten der gesamten Übertragungsketten A, B und der zugehörigen Verbindungen bei der empfangenden Teilnehmereinheit T' bekannt sein.

Bei der praktischen Realisierung dieser Vorgehensweise kann die Übertragung von Fehlerzuständen zu den empfangenden Teilnehmereinheiten T' zu einem Problem führen, da die Anbindungen der Teilnehmereinheiten T' an die Verarbeitungseinheiten 1 mit niedrigerer Bandbreite erfolgen.

Letztendlich kann nur die empfangende Teilnehmereinheit T' entscheiden, ob sie von einem Fehler in einer Übertragungskette betroffen ist. Im Falle eines Fehlers einer Verarbeitungseinheit 1 oder eines Fehlers einer Verbindung in einer Übertragungskette muss die empfangende Teilnehmereinheit T' überprüfen, ob das ausgewählte Audiosignal von diesem Fehler betroffen ist, oder ob eine Umschaltung auf das Audiosignal der jeweils anderen Übertragungskette ausgelöst werden muss.

Fig. 6 zeigt in diesem Zusammenhang ein Ausführungsbeispiel einer Kommunikation zwischen dem Teilnehmer P1 und Teilnehmer P2 bzw. Teilnehmer P3 über das Kommunikationssystem 400 aus Fig. 4.

Teilnehmer P1, Teilnehmer P2 und Teilnehmer P3 verfügen beide jeweils über eine Teilnehmereinheit T1, T2, T3, die jeweils an eine Verarbeitungseinheit 1A der ersten Übertragungskette A und eine Verarbeitungseinheit 1B der zweiten Übertragungskette B angebunden sind. Über einen ersten Breitband-Übertragungspfad 3A sind die Verarbeitungseinheiten 1A der ersten Übertragungskette A miteinander verbunden und die die Verarbeitungseinheiten 1B der zweiten Übertragungskette B sind miteinander über einen zweiten Breitband-Übertragungspfad 3B verbunden.

Wird vom Teilnehmer P1 also ein Audiosignal eingegeben, z.B. eine Sprechfunkmeldung über das Mikrofon an der Teilnehmereinheit T1 abgegeben, wird dieses Audiosignal jeweils über die Verarbeitungseinheit 1A, 1B und den Breiband-Übertragungspfad 3A, 3B an die Verarbeitungseinheit 1A, 1B, an der der Teilnehmer P2 mit seiner Teilnehmereinheit T2 und der Teilnehmer P3 mit seiner Teilnehmereinheit T3 angebunden sind, übertragen. Der Teilnehmer P2 und der Teilnehmer P3 wählen das Audiosignal entweder der Übertragungskette A oder der Übertragungskette B aus, in dargestellten Ausführungsbeispiel wäre dies z.B. das Signal von der Übertragungskette A.

Im Fehlerfall müssen die folgenden Schritte durchgeführt werden. Zur Erläuterung wird ein Fehler in der Anbindung an die Verarbeitungseinheit 1A der Übertragungskette A angenommen, die mit der Teilnehmereinheit T1 des Teilnehmers P1 verbunden ist. Die an der Teilnehmereinheit T1 des Teilnehmers P1 eingegebenen Audiosignale können aufgrund einer Störung in der angebundenen Verarbeitungseinheit 1A nicht an diese übertragen werden, was durch eine Streichung "x" des betreffenden Audiosignals in Fig. 6 angedeutet ist.

Die bei den einzelnen Schritten angegebenen Nummern sind bei den entsprechenden Elementen in Fig. 6 angegeben. Fig. 6 zeigt die Übertragung der Fehlerinformation und die zugehörigen Schritte.
- (1) Fehlererkennung in der betroffenen Verarbeitungseinheit 1A der Übertragungskette A (z.B. anhand von internen Fehlermeldungen),
- (2) Verteilung der Fehlerinformation an alle anderen Elemente bzw. Komponenten der betroffenen Übertragungskette A inkl. der Teilnehmereinheiten T2, T3.
- (3) Da eine Fehlerinformation bezüglich der betroffenen Verarbeitungseinheit 1A an die Komponenten der Übertragungskette A verteilt wurde, muss nun jede Komponente, die eine Entscheidung für die Auswahl des Audiosignals treffen kann, d.h. jede empfangende Verarbeitungseinheit T eines empfangenden Teilnehmers - im Ausführungsbeispiel sind dies die Verarbeitungseinheiten T2 und T3 der Teilnehmer P2 und P3 - überprüfen, ob die empfangende Teilnehmereinheit T von dem Fehler in der Übertragungskette A betroffen ist und gegebenenfalls muss das Ausgangssignal von der anderen redundanten Übertragungskette B ausgewählt werden.
- (4) Der Fehler wird aber auch in der betroffenen Teilnehmereinheit T1 des Teilnehmers P1 erkannt und es erfolgt unabhängig eine Umschaltung für die empfangenen Audiosignale in der Teilnehmereinheit T1 des Teilnehmers P1 auf die andere Übertragungskette B.

Nachteile einer derartigen Implementierung sind:
- Um bei einem Fehlerzustand in der Übertragungskette die Ausfallszeit des Audioausgangssignals bei einem empfangenden Teilnehmer so kurz wie möglich halten zu können, ist ein schneller Übertragungsmechanismus der Fehlerinformationen bzw. der Statusinformationen zwischen allen Komponenten einer Übertragungskette notwendig.
- Bei mehreren, unterschiedlichen Fehlerzuständen in den redundanten Übertragungsketten können bei dieser Anordnung unter Umständen alleine durch eine Umschaltung nicht alle Fehlerzustände kompensiert werden.
- Bei Kommunikationssystemen mit einer zusätzlichen Verarbeitungseinheit zur Berechnung von Audiokonferenzen mit mehreren Teilnehmern können die Konferenzeinheiten bei unterschiedlichen Fehlern in den redundanten Übertragungsketten unterschiedliche Konferenzsignale liefern. Dies bedeutet, dass durch eine Umschaltung in einer Teilnehmereinheit T von dem Audiosignal einer Übertragungskette auf das Signal der anderen Übertragungskette andere Teilnehmer im Konferenzsignal fehlen können.

### Erfindungsgemäßes Kommunikationssystem bzw. Verfahren zur Übertragung von Audiosignalen

Ein erfindungsgemäßes Verfahren bzw. ein erfindungsgemäßes Kommunikationssystem kann insbesondere bei bzw. als Sprachkommunikationssystemen für sicherheitskritische Anwendungen zum Einsatz kommen und dabei die Verfügbarkeit der Funktionen des Kommunikationssystems im Fehlerfall erhöhen. Diese Systeme können zum Beispiel Sprachkommunikationssysteme für die zivile Flugsicherung sein, bei denen eine Vielzahl von Fluglotsen über unterschiedliche Funkkanäle mit verschiedenen Frequenzen mit den Flugzeugpiloten kommunizieren oder auch Kommunikationssysteme, wo eine sehr große Anzahl von Operatoren als Teilnehmern in einzelnen Audiokonferenzen Informationen austauschen, wie sie z.B. in den Überwachungszentren der bemannten Raumfahrt zum Einsatz kommen.

Im Folgenden werden nun der Aufbau und die Funktionsweise eines erfindungsgemäßen Kommunikationssystems 100 erläutert, das die oben genannten Probleme bei fehlender Übertragung von Audiosignalen in einer Übertragungskette behebt. Die Beschreibung erfolgt beispielhaft ohne Einschränkungen an Hand eines Kommunikationssystems, das über weitere Verarbeitungseinheiten 2A, 2B verfügt, an denen keine Teilnehmer bzw. Teilnehmereinheiten angeschlossen sind und die jeweils mit zumindest einem Breitband-Übertragungsinterlink ausgestattet sind, worauf im Folgenden noch näher eingegangen wird. Derartige weitere Verarbeitungseinheiten 2A, 2B sind jedoch optional und es könnten beispielsweise auch eine oder mehrere teilnehmerseitige Verarbeitungseinheiten 1A, 1B in jeder Übertragungskette A, B mit zumindest einem Breitband-Übertragungsinterlink ausgestattet sein.

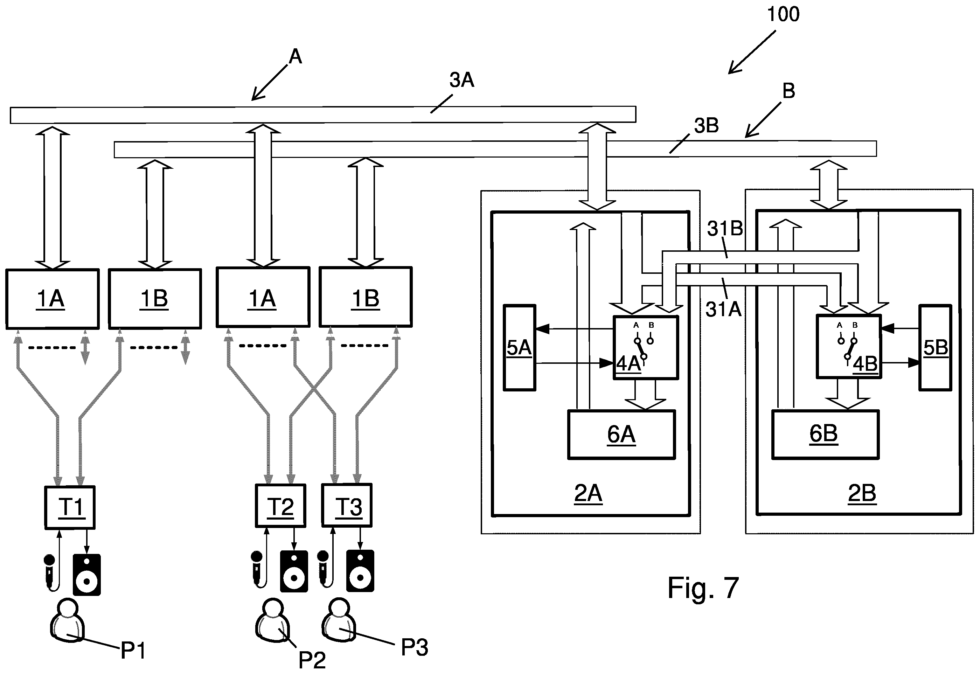

Fig. 7 zeigt ein erfindungsgemäßes, redundant aufgebautes, Kommunikationssystem 100, das eine erste Übertragungskette A und eine zweite Übertragungskette B umfasst. Selbstverständlich können auch mehr als zwei Übertragungsketten umfasst sein. In Fig. 7 sind beispielhaft drei Teilnehmer P1, P2, P3 eingezeichnet, die über eine Audiokonferenz miteinander kommunizieren können. Selbstverständlich können es auch mehr oder weniger Teilnehmer sein.

Jede Übertragungskette A, B umfasst im Ausführungsbeispiel zwei teilnehmerseitige Verarbeitungseinheiten 1A, 1B und eine weitere Verarbeitungseinheit 2A, 2B, in der z.B. Audiokonferenzen berechnet werden können. Die teilnehmerseitigen Verarbeitungseinheiten 1A, 1B und die weiteren Verarbeitungseinheiten 2A, 2B verfügen jeweils über eine Audioverarbeitungseinheit 6. An die teilnehmerseitigen Verarbeitungseinheiten 1A, 1B sind drei Teilnehmereinheiten T1, T2, T3 von drei Teilnehmern P1, P2, P3, beispielsweise über ein Übertragungsmedium mit niedriger Bandbreite angeschlossen. Jeder Teilnehmereinheit T1, T2, T3 umfasst im Ausführungsbeispiel ein Mikrofon zur Eingabe von zu übertragenden Audiosignalen und einen Lautsprecher oder Kopfhörer zur Abgabe von empfangenen Audiosignalen. Alternativ oder zusätzlich dazu kann eine Teilnehmereinheit T1, T2, T3 aber auch als ein Interface zu einer Telefonleitung oder zu einem Funkgerät (Sender/Empfänger) ausgebildet sein.

Jede teilnehmerseitige Verarbeitungseinheit 1A, 1B ist jeweils mit zumindest einer oder mehreren Teilnehmereinheiten verbunden und jede Teilnehmereinheit T1, T2, T3 ist jeweils mit einer teilnehmerseitigen Verarbeitungseinheit 1A der ersten Übertragungskette A und einer teilnehmerseitigen Verarbeitungseinheit 1B der zweiten Übertragungskette B verbunden.

Die Signalübertragung zwischen der teilnehmerseitigen Verarbeitungseinheit 1A, 1B und der weiteren Verarbeitungseinheit 2A, 2B innerhalb der Übertragungsketten A, B ist über einen Breitband-Übertragungspfad 3A, 3B realisiert. Im Ausführungsbeispiel handelt es sich bei diesem Breitband-Übertragungspfad 3A, 3B, jeweils um einen PCM-Highway.

Zusätzlich sind bei einem erfindungsgemäßen Kommunikationssystem 100 die weiteren Verarbeitungseinheiten 2A, 2B der Übertragungsketten A, B miteinander über Breitband-Übertragungsinterlinks 31A, 31B miteinander verbunden. Im Ausführungsbeispiel handelt es sich dabei um breitbandige Interlinks, über die der gesamte PCM-Highway der jeweiligen Übertragungskette an die jeweils andere Übertragungskette übertragen werden kann.

Alternativ dazu kann auch ein einzelner bidirektionaler Breitband-Übertragungsinterlink vorgesehen sein. Dabei werden über den ersten Breitband-Übertragungsinterlink 31A Audiosignale aus der ersten Übertragungskette A an die zweite Übertragungskette B weitergeleitet und über den zweiten Breitband-Übertragungsinterlink 31B Audiosignale aus der zweiten Übertragungskette B an die erste Übertragungskette A.

Zusätzlich erkennen Fehlererkennungseinheiten 5A, 5B in den weiteren Verarbeitungseinheiten 2A, 2B etwaige Fehlerzustände von einzelnen Signalen oder von Signalteilen, d.h. auch fehlende PTT- oder SQU-Signale, auf dem Breitband-Übertragungspfad 3A, 3B, d.h. dem jeweiligen PCM-Highway, an den die teilnehmerseitigen Verarbeitungseinheiten 1A, 1B angeschlossen ist.

Fehlende Signale können beispielsweise indirekt auf Grund der Fehlerzustände der angeschlossenen teilnehmerseitigen Verarbeitungseinheiten 1A, 1B erkannt werden, wobei die Statusinformationen nur zwischen der teilnehmerseitigen Verarbeitungseinheit und der weiteren Verarbeitungseinheit innerhalb einer Übertragungskette A, B über den Breitband-Übertragungspfad und nicht an die Teilnehmereinheiten T1, T2, T3 übertragen werden brauchen.

Im Ausführungsbeispiel wird von den weiteren Verarbeitungseinheiten 2A, 2B ausgewählt, über welche Übertragungskette A, B bzw. welchen Breitband-Übertragungspfads 3A, 3B von einem Teilnehmer an einer Teilnehmereinheit T1, T2, T3 eingegebene Signale an die teilnehmerseitigen Verarbeitungseinheiten 1A, 1B der empfangenden Teilnehmereinheiten bzw. Teilnehmer übertragen werden sollen.

Dazu verfügen die weiteren Verarbeitungseinheiten 2A, 2B der Übertragungsketten A, B jeweils über eine Umschalteinheit 4A, 4B. Die Umschalteinheit 4A ist mit dem Breitband-Übertragungspfad 3A der Übertragungskette A und dem zweiten Breitband-Übertragungsinterlink 31B verbunden. Die Umschalteinheit 4B ist mit dem Breitband-Übertragungspfad 3B der Übertragungskette B und dem ersten Breitband-Übertragungsinterlink 31A verbunden. Die Breitband-Übertragungsinterlinks 31A, 31B stellen sicher, dass im Ausführungsbeispiel an jeder weiteren Verarbeitungseinheit 2A, 2B für jedes Audiosignal ein alternativer Kanal zur Verfügung steht, der im Fall eines Umschaltens mit Sicherheit ein fehlerfreies Audiosignal liefert. Die Verarbeitung der Audiosignale, d.h. die Erstellung von neuen Audiodaten (z.B. Audiosignale von Konferenzen) aus dem empfangenen Strom von Signalen, erfolgt in den Audioverarbeitungseinheiten 6A, 6B. Abhängig von der Funktion des Kommunikationssystems 100 können zum Beispiel bei Kommunikationssystem für die Flugsicherung die Audioverarbeitungseinheiten 6A bzw. 6B die Auswahl des besten Funksignals (Best Signal Selektion) oder bei Konferenzsystem die Berechnung von Audiokonferenzen sein.

Über den Breitband-Übertragungsinterlinks 31A werden alle Signale des Breitband-Übertragungspfads 3A und über den Breitband-Übertragungsinterlinks 31B werden alle Signale des Breitband-Übertragungspfads 3B übertragen.

Somit kann die Umschalteinheit 4A für jedes einzelne Signal zwischen dem Breitband-Übertragungspfad 3A der Übertragungskette A und dem Breitband-Übertragungsinterlink 31B zur Übertragung von Signalen aus der jeweils anderen Übertragungskette B umschalten. Die Umschalteinheit 4B kann für jedes einzelne Signal zwischen dem Breitband-Übertragungspfad 3B der Übertragungskette B und dem Breitband-Übertragungsinterlink 31A zur Übertragung von Signalen aus der jeweils anderen Übertragungskette A umschalten.

Wenn beispielsweise in der Fehlererkennungseinheit 5A der ersten Übertragungskette A das Fehlen von Signalen erkannt wird, werden die entsprechenden Signale des Breitband-Übertragungsinterlinks 31B zur zweiten Übertragungskette B selektiv an die empfangenden teilnehmerseitigen Audioverarbeitungseinheit 6A weitergeleitet, von welcher die verarbeiteten Signale zurück an die teilnehmerseitige Verarbeitungseinheiten 1A schickt.

Dadurch ist es möglich, am Breitband-Übertragungspfad fehlende Signale bei einzelnen teilnehmerseitigen Verarbeitungseinheiten 1A durch jene des Breitband-Übertragungsinterlinks 31B zu ersetzen und damit diesen Fehler zu kompensieren. Dadurch verringern sich auch beim Auftreten eines Fehlers die Ausfallszeiten, in denen Audiosignale bei den Teilnehmereinheiten fehlen, und zwar unabhängig von der Funktion der Audioverarbeitung 6A in der weiteren Verarbeitungseinheit 2A als auch in allen anderen Komponenten der Übertragungskette A. Bei den Teilnehmereinheiten T, die über Verbindungen mit niedriger Bandbreite an die Verarbeitungseinheiten 1A bzw. 1B angebunden sind, erfolgt nur dann eine Umschaltung, wenn die vom Fehler betroffene Übertragungskette für die Ausgabe von Audiosignalen ausgewählt wurde.

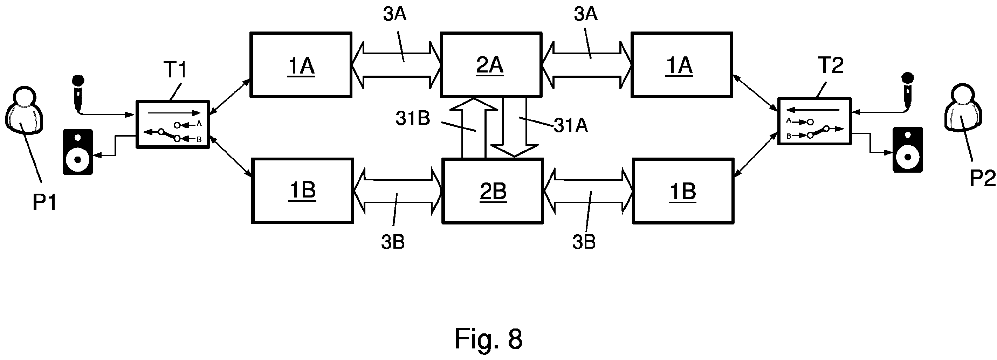

Fig. 8 zeigt die Übertragungsketten A, B des erfindungsgemäßen Kommunikationssystems 100, das in Fig. 7 dargestellt ist. bei einer Kommunikation zwischen dem Teilnehmer P1 und Teilnehmer P2.

Teilnehmer P1 und Teilnehmer P2 verfügen beide jeweils über eine Teilnehmereinheit T1, T2, die jeweils an eine teilnehmerseitige Verarbeitungseinheit 1A der ersten Übertragungskette A und eine teilnehmerseitige Verarbeitungseinheit 1B der zweiten Übertragungskette B angebunden ist. Über einen ersten Breitband-Übertragungspfad 3A sind die teilnehmerseitigen Verarbeitungseinheiten 1A der ersten Übertragungskette A jeweils mit der weiteren Verarbeitungseinheit 2A der ersten Übertragungskette A verbunden und die teilnehmerseitigen Verarbeitungseinheiten 1B der zweiten Übertragungskette B sind jeweils mit der weiteren Verarbeitungseinheit 2B der zweiten Übertragungskette B über einen zweiten Breitband-Übertragungspfad 3B verbunden.

Zusätzlich ist die weitere Verarbeitungseinheit 2A der ersten Übertragungskette A über einen ersten Breitband-Übertragungsinterlink 31A mit der weiteren Verarbeitungseinheit 2B der zweiten Übertragungskette B verbunden, über den Signale aus der Übertragungskette A an die zweite Übertragungskette B weitergeleitet werden können. Weiters ist die weitere Verarbeitungseinheit 2B der zweiten Übertragungskette B über einen zweiten Breitband-Übertragungsinterlink 31B mit der weiteren Verarbeitungseinheit 2A der zweiten Übertragungskette A verbunden, über den Signale aus der Übertragungskette B an die erste Übertragungskette A weitergeleitet werden können.

Wird vom Teilnehmer P1 also ein Audiosignal eingegeben, z.B. eine Sprechfunkmeldung über das Mikrofon an der Teilnehmereinheit T1 abgegeben, wird dieses Signal jeweils über die teilnehmerseitige Verarbeitungseinheit 1A, 1B und den Breitband-Übertragungspfad 3A, 3B an die teilnehmerseitige Verarbeitungseinheit 1A, 1B, an der der Teilnehmer P2 mit seiner Teilnehmereinheit T2 angebunden ist, übertragen.

Die Entscheidungen, ob Audiosignale am Audiosignale am Breitband-Übertragungspfad 3A oder 3B fehlen und dass die notwendigen Umschaltungen durchgeführt werden, werden bei einem erfindungsgemäßen Kommunikationssystem 100 in den jeweiligen weiteren Verarbeitungseinheiten 2A, 2B getroffen und nicht wie bei den oben beschriebenen, bekannten Kommunikationssystemen 200, 300, 400 bei der empfangenden Teilnehmereinheit T. Diese Entscheidung wird für jedes einzelne Signal, das über den jeweiligen Breitband-Übertragungspfad 3A, 3B bzw. den jeweiligen PCM-Highway übertragen wird, individuell getroffen.

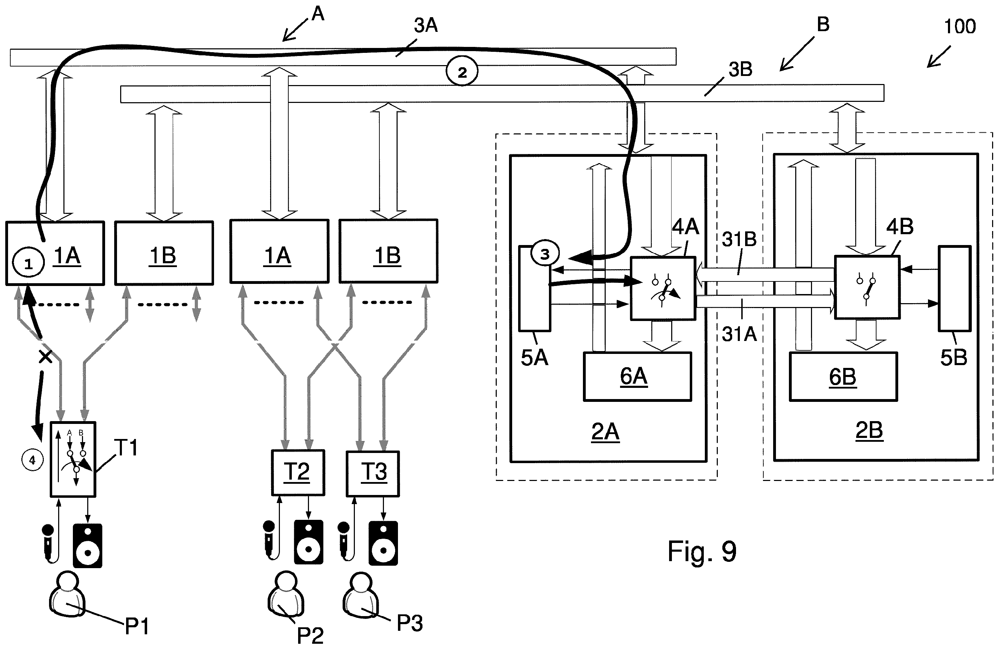

Fig. 9 zeigt in diesem Zusammenhang ein Ausführungsbeispiel einer Kommunikation zwischen dem Teilnehmer P1 und Teilnehmern P2, P3 über das erfindungsgemäße Kommunikationssystem 100 aus Fig. 7.

Teilnehmer P1, Teilnehmer P2 und Teilnehmer P3 verfügen beide jeweils über eine Teilnehmereinheit T1, T2, T3 die jeweils an eine teilnehmerseitige Verarbeitungseinheit 1A der ersten Übertragungskette A und eine teilnehmerseitige Verarbeitungseinheit 1B der zweiten Übertragungskette B angebunden ist. Über einen ersten Breitband-Übertragungspfad 3A sind die teilnehmerseitigen Verarbeitungseinheiten 1A der ersten Übertragungskette A jeweils mit der weiteren Verarbeitungseinheit 2A der ersten Übertragungskette A verbunden und die teilnehmerseitigen Verarbeitungseinheiten 1B der zweiten Übertragungskette B sind jeweils mit der weiteren Verarbeitungseinheit 2B der zweiten Übertragungskette B über einen zweiten Breitband-Übertragungspfad 3B verbunden.

Wird vom Teilnehmer P1 also ein Audiosignal eingegeben, z.B. eine Sprechfunkmeldung über das Mikrofon an der Teilnehmereinheit T1 abgegeben, wird dieses Audiosignal weiterverarbeitet und als Signal jeweils über die teilnehmerseitige Verarbeitungseinheit 1A, 1B und den Breiband-Übertragungspfad 3A, 3B an die weitere Verarbeitungseinheit 2A, 2B und anschließend an die teilnehmerseitige Verarbeitungseinheit 1A, 1B an der der Teilnehmer P2 mit seiner Teilnehmereinheit T2 bzw. der Teilnehmer P3 mit seiner Teilnehmereinheit T3 angebunden sind, übertragen.

Im Fehlerfall werden im Ausführungsbeispiel die folgenden Schritte durchgeführt. Zur Erläuterung wird ein Fehler in der teilnehmerseitigen Verarbeitungseinheit 1A der Übertragungskette A angenommen, die mit der Teilnehmereinheit T1 des Teilnehmers P1 verbunden ist. Die an der Teilnehmereinheit T1 des Teilnehmers P1 eingegebenen Audiosignale können aufgrund einer Störung in der angebundenen teilnehmerseitigen Verarbeitungseinheit 1A nicht an diese übertragen werden, was durch eine Streichung "x" des betreffenden Audiosignals in Fig. 9 angedeutet ist.

Die bei den einzelnen Schritten angegebenen Nummern sind bei den entsprechenden Elementen in Fig. 9 angegeben. Fig. 9 zeigt die Übertragung der Fehlerinformation und die zugehörigen Schritte:
- (1) Fehlererkennung in der betroffenen teilnehmerseitigen Verarbeitungseinheit 1A der Übertragungskette A und Erzeugung einer entsprechenden Fehlerinformation,
- (2) Verteilung der Fehlerinformation an die weitere Verarbeitungseinheit 2A der Übertragungskette A über den Breitband-Übertragungspfad 3A, Verarbeitung der Fehlerinformation und Fehlerdetektion durch die Fehlererkennungseinheit 5A der weiteren Verarbeitungseinheit 2A.
- (3) Ansteuerung der Umschalteinheit 4A der weiteren Verarbeitungseinheit 2A durch die Fehlererkennungseinheit 5A und Umschaltung durch die Umschalteinheit 4A zum Erhalt der fehlenden Signale über den zweiten Breitband-Übertragungsinterlink 31B, der die weitere Verarbeitungseinheit 2A mit der weiteren Verarbeitungseinheit 2B der zweiten Übertragungskette B verbindet und über den Signale aus der Übertragungskette B an die erste Übertragungskette A weitergeleitet werden. An die teilnehmerseitige Verarbeitungseinheiten 1A, die mit der Teilnehmereinheit T2 des Teilnehmers P2 verbunden ist, werden also bei fehlender Übertragung von Signalen über die erste Übertragungskette A automatisch die Signale der zweiten Übertragungskette B übertragen, ohne dass in der Teilnehmereinheit T2 oder durch den Teilnehmer P2 irgendwelche Aktionen bzw. Handlungen gesetzt werden brauchen. Diese Entscheidung wird für jedes einzelne Signal, das über den jeweiligen Breitband-Übertragungspfad 3A, 3B bzw. den jeweiligen PCM-Highway übertragen wird, individuell getroffen. Somit können Audiosignale, die am Breitband-Übertragungspfad 3A, 3B fehlen, für die Verarbeitung in der Audioverarbeitungseinheit 6A, 6B durch die Signale des jeweils anderen Breitband-Übertragungspfads 3B, 3A ersetzt werden.
- (4) Unabhängig davon wird, wie im gezeigten Ausführungsbeispiel in Fig. 9, der Fehler in der teilnehmerseitigen Verarbeitungseinheit 1A aber auch in der betroffenen Teilnehmereinheit T1 des Teilnehmers P1 selbst detektiert und es erfolgt unabhängig davon in der Teilnehmereinheit T1 eine Umschaltung dieser Teilnehmereinheit auf die zweite Übertragungskette B, um Audiosignale, die auf dem Lautsprecher oder dem Kopfhörer abgegeben werden, auch empfangen zu können.

Bei einem erfindungsgemäßen Kommunikationssystem 100 ist also vorteilhafterweise keine Umschaltung in den Teilnehmereinheiten T2, T3 der Teilnehmer P2, P3 notwendig, da das fehlende Signal über den zweiten Breitband-Übertragungsinterlink 31B, der die weitere Verarbeitungseinheit 2A mit der weiteren Verarbeitungseinheit 2B verbindet, auch in der ersten Übertragungskette A verfügbar ist, die von dem Fehler betroffen ist.

Da vom Teilnehmer P1 an der Teilnehmereinheit T1 eingegebene Audiosignale auch über die teilnehmerseitige Verarbeitungseinheit 1B, mit der die Teilnehmereinheit T1 verbunden ist, und den Breiband-Übertragungspfad 3B übertragen werden, sind beim Teilnehmer P3, dessen Teilnehmereinheit T3 mit einer teilnehmerseitigen Verarbeitungseinheit 1B verbunden ist, die Signale über den Breitband-Übertragungspfad 3B erhält, alle vom Teilnehmer P1 eingegebenen Signale vollständig verfügbar.

Für den Fall, dass der Fehlerzustand behoben wird, wird wieder auf das über den Breitband-Übertragungspfad 3A übertragene Signal, an den die teilnehmerseitige Verarbeitungseinheit 1A angeschlossen ist, um- bzw. zurückgeschaltet. Dazu kann einerseits eine entsprechende Fehlerstatusmeldung von der teilnehmerseitigen Verarbeitungseinheit 1A generiert und über den Breitband-Übertragungspfad 3A an die weitere Verarbeitungseinheit 2A übertragen werden, wo die Fehlerstatusmeldung von der Fehlererkennungseinheit 5A verarbeitet und ein entsprechender Steuerbefehl an die Umschalteinheit 4A abgegeben wird. Alternativ dazu ist es auch möglich, dass die Fehlererkennungseinheit 5A laufend überprüft, ob Signale über den Breitband-Übertragungspfad 3A übertragen werden und sollte dies der Fall sein, einen Steuerbefehl zur Umschaltung auf den Breitband-Übertragungspfad 3A an die Umschalteinheit 4A abgibt.

Die Umschaltung zwischen den Signalen der redundanten Übertragungsketten A, B kann für jedes Signal einzeln und autonom in den weiteren Verarbeitungseinheiten 2A, 2B, die mit einem Breitband-Übertragungsinterlink 31A, 31B ausgestattet sind, durchgeführt werden. Wenn die Bandbreite des Breitband-Übertragungsinterlinks 31A, 31B groß genug ist, können alle Signale eines jeweiligen Breitband-Übertragungspfads 3A, 3B der jeweiligen Übertragungskette A, B an die weitere Verarbeitungseinheit der jeweils anderen Übertragungskette übertragen werden. Sollte die verfügbare Bandbreite für die Übertragung aller Signale allerdings zu gering sein, können alternativ auch nur die notwendigen Signale auf Anforderung übertragen werden. Damit erhöht sich allerdings die Zeitdauer, bis die Auswirkungen eines Fehlers behoben sind, da eine zusätzliche Kommunikation zwischen den weiteren Verarbeitungseinheiten 2A, 2B der redundanten Übertragungsketten A, B notwendig ist.

Damit ergeben sich die folgenden weiteren Verbesserungen gegenüber den bekannten Kommunikationssystemen 200, 300, 400:
- Signale, die auf einem Breitband-Übertragungsmedium 3A, 3B fehlen, können innerhalb einer Übertragungskette A, B dadurch kompensiert werden, dass diese Signale durch die Signale der jeweils anderen Übertragungskette A, B ersetzt werden. Eine Fehlerfortpflanzung durch fehlende Audiosignale kann dadurch reduziert werden.
- Reduktion der Ausfallszeit eines Ausgangssignals an den Teilnehmereinheiten T im Fehlerfall, da die Erkennung des Fehlers innerhalb der Übertragungsketten A, B erfolgt und auch dort die Umschaltaktionen gesetzt werden, um das Fehlen von Audiosignalen zu kompensieren.
- Die Auswahl- und Umschaltentscheidungen erfolgen unabhängig vom Applikationsprogramm in den weiteren Verarbeitungseinheiten 2A, 2B bzw. optional zusätzlich in allen oder ausgewählten Teilnehmereinheiten T1, T2, T3 erfolgen.

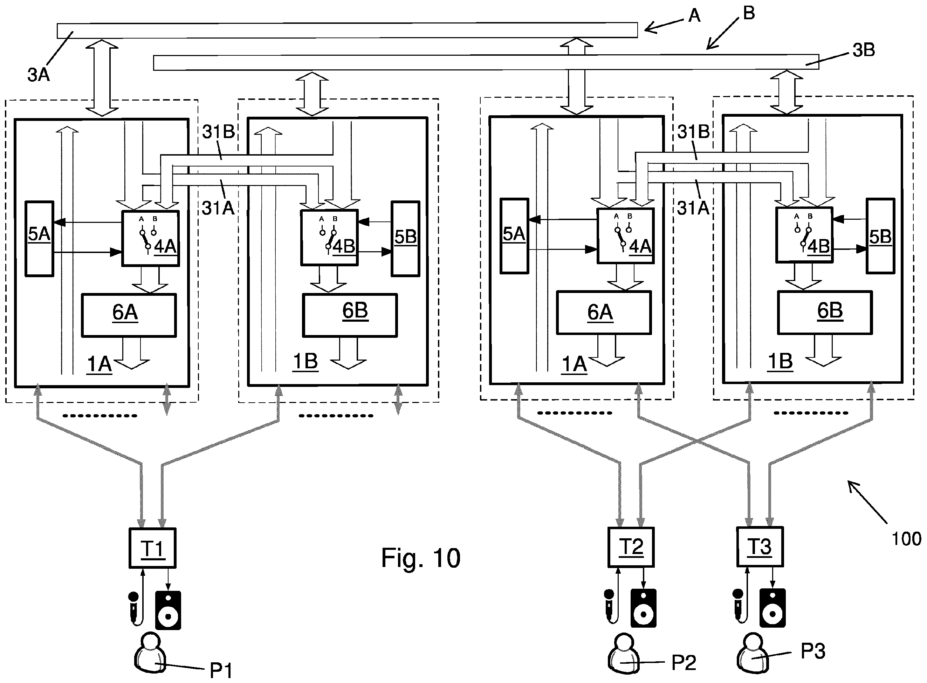

Fig. 10 zeigt ein weiteres Ausführungsbeispiel eines erfindungsgemäßen Kommunikationssystems 100, das zwar einen geringfügig anderen Hardware-Aufbau aufweist, dessen prinzipielle Funktionsweise aber der weiter oben beschriebenen Funktionsweise entspricht.

Im Ausführungsbeispiel in Fig. 10 verfügt das erfindungsgemäße Kommunikationssystem 100 über keine weiteren Verarbeitungseinheiten 2A, 2B mit zumindest einem Breitband-Übertragungsinterlink. Anstelle von weiteren Verarbeitungseinheiten 2A, 2B sind im Ausführungsbeispiel in Fig. 10 jeweils die teilnehmerseitigen Verarbeitungseinheiten 1A der ersten Übertragungskette A mit zwei teilnehmerseitigen Verarbeitungseinheiten 1B der zweiten Übertragungskette B über Breitband-Übertragungsinterlinks 31A, 31B miteinander verbunden, wie sie bereits im Zusammenhang mit dem oben beschriebenen Ausführungsbeispiel erläutert wurden. Alternativ dazu kann auch ein einzelner bidirektionaler Breitband-Übertragungsinterlink vorgesehen sein. Über den ersten Breitband-Übertragungsinterlink 31A Audiosignale aus der ersten Übertragungskette A an die zweite Übertragungskette B weitergeleitet und über den zweiten Breitband-Übertragungsinterlink 31B Audiosignale aus der zweiten Übertragungskette B an die erste Übertragungskette A.

Die teilnehmerseitigen Verarbeitungseinheiten 1A, 1B, die über einen Breitband-Übertragungsinterlink 31A, 31B verfügen, weisen weiters Fehlererkennungseinheiten 5A, 5B, sowie Umschalteinheiten 4A, 4B auf, wie sie bereits weiter oben beschrieben wurden. Die Verarbeitung der Audiosignale, d.h. die Erstellung von Audiodaten aus dem empfangenen Strom von Signalen, erfolgt, wie ebenfalls zuvor beschrieben, in den Audioverarbeitungseinheiten 6A, 6B, die ebenfalls in den teilnehmerseitigen Verarbeitungseinheiten 1A, 1B untergebracht sind.

## Patentansprüche

1. Kommunikationssystem (100) zur Übertragung von Audiosignalen und weiteren Signalen, insbesondere PTT- und SQU-Signale, zwischen zwei oder mehr Teilnehmereinheiten (T1, T2, T3) über zumindest eine erste Übertragungskette (A) und eine zweite Übertragungskette (B),
- wobei an jeder Teilnehmereinheit (T1, T2, T3) zu übertragende Audiosignale und gegebenenfalls weitere Signale, insbesondere PTT- und SQU-Signale, eingebbar und empfangene Audiosignale abgebbar sind,
- wobei jede Übertragungskette (A, B) jeweils zumindest eine teilnehmerseitige Verarbeitungseinheit (1A, 1B) und gegebenenfalls zumindest eine weitere Verarbeitungseinheit (2A, 2B) umfasst,
- wobei jede teilnehmerseitige Verarbeitungseinheit (1A, 1B) jeweils mit zumindest einer Teilnehmereinheit (T1, T2, T3) verbunden ist,
- wobei jede Teilnehmereinheit (T1, T2, T3) jeweils mit einer teilnehmerseitigen Verarbeitungseinheit (1A) der ersten Übertragungskette (A) und einer teilnehmerseitigen Verarbeitungseinheit (1B) der zweiten Übertragungskette (B) verbunden ist,
- wobei die teilnehmerseitigen Verarbeitungseinheiten (1A, 1B) einer jeweiligen Übertragungskette (A, B) miteinander über einen Breitband-Übertragungspfad (3A, 3B) und/oder mit einer weiteren Verarbeitungseinheit (2A, 2B) der jeweiligen Übertragungskette (A, B), verbunden sind,
**dadurch gekennzeichnet,**
- **dass** zumindest eine teilnehmerseitige Verarbeitungseinheit (1A) oder zumindest eine weitere Verarbeitungseinheit (2A) der ersten Übertragungskette (A) mit zumindest einer teilnehmerseitigen Verarbeitungseinheit (2B) oder zumindest einer weiterer Verarbeitungseinheit (2B) der zweiten Übertragungskette (B) über zumindest einen Breitband-Übertragungsinterlink miteinander verbunden sind,
wobei über den Breitband-Übertragungsinterlink Audiosignale und gegebenenfalls weitere Signale aus der ersten Übertragungskette (A) an die zweite Übertragungskette (B) und/oder aus der zweiten Übertragungskette (B) an die erste Übertragungskette (A) weiterleitbar sind, und
- **dass** diese zumindest eine, einen Breitband-Übertragungsinterlink aufweisende, teilnehmerseitige Verarbeitungseinheit (1A, 1B) und/oder diese zumindest eine, einen Breitband-Übertragungsinterlink aufweisende, weitere Verarbeitungseinheit (2A, 2B) jeder der Übertragungsketten (A, B), jeweils Folgendes umfasst:
▪ eine Umschalteinheit (4A, 4B), wobei die Umschalteinheit (4A, 4B) jeweils
- mit dem Breitband-Übertragungspfad (3A, 3B) der jeweiligen Übertragungskette (A, B) und dem zumindest einen Breitband-Übertragungsinterlink verbunden ist und
- dazu ausgebildet ist, zwischen dem Breitband-Übertragungspfad (3A, 3B) der jeweiligen Übertragungskette (A, B) und dem Breitband-Übertragungsinterlink zur Übertragung von Audiosignalen und gegebenenfalls weiteren Signalen aus der jeweils anderen Übertragungskette (A, B) umzuschalten,
▪ eine mit der Umschalteinheit (4A, 4B) verbundene Fehlererkennungseinheit (5A, 5B),
wobei die Fehlererkennungseinheit (5A) der ersten Übertragungskette (A) dazu ausgebildet ist,
- zu überprüfen, ob an einer Teilnehmereinheit eingegebene Audiosignale und gegebenenfalls weitere Signale, insbesondere PTT- und SQU-Signale, über den Breitband-Übertragungspfad (3A) der ersten Übertragungskette (A) übertragen werden, und
- bei fehlender Übertragung der eingegebenen Audiosignale und gegebenenfalls weiteren Signale über den Breitband-Übertragungspfad (3A) der ersten Übertragungskette (A), die Umschalteinheit (4A) zum Umschalten von dem Breitband-Übertragungspfad (3A) der ersten Übertragungskette (A) auf den Breitband-Übertragungsinterlink zur Übertragung von Audiosignalen und gegebenenfalls weiteren Signalen aus der zweiten Übertragungskette (B) anzusteuern, und
wobei die Fehlererkennungseinheit (5B) der zweiten Übertragungskette (B) dazu ausgebildet ist,
- zu überprüfen, ob an einer Teilnehmereinheit eingegebene Audiosignale und gegebenenfalls weitere Signale, insbesondere PTT- und SQU-Signale, über den Breitband-Übertragungspfad (3B) der zweiten Übertragungskette (B) übertragen werden, und
- bei fehlender Übertragung der eingegebenen Audiosignale und gegebenenfalls weiteren Signale über den Breitband-Übertragungspfad (3B) der zweiten Übertragungskette (B), die Umschalteinheit (4B) zum Umschalten von dem Breitband-Übertragungspfad (3B) der zweiten Übertragungskette (B) auf den Breitband-Übertragungsinterlink zur Übertragung von Audiosignalen und gegebenenfalls weiteren Signalen aus der ersten Übertragungskette (A) anzusteuern und
▪ eine Audioverarbeitungseinheit (6), wobei die Audioverarbeitungseinheit (6) der Umschalteinheit (4A, 4B) nachgeschaltet ist, sodass der Audioverarbeitungseinheit (6) die von der Umschalteinheit (4A, 4B) ausgewählten Audiosignale zuführbar sind.

2. Kommunikationssystem (100) nach Anspruch 1, **dadurch gekennzeichnet,**
**dass** die Fehlererkennungseinheit (5A) der ersten Übertragungskette (A) dazu ausgebildet ist,
- nach der Umschaltung vom Breitband-Übertragungspfad (3A) der ersten Übertragungskette (A) auf den Breitband-Übertragungsinterlink zur Übertragung von Audiosignalen und gegebenenfalls weiteren Signalen, insbesondere PTT- und SQU-Signalen, aus der zweiten Übertragungskette (B) zu überprüfen, ob wieder über den Breitband-Übertragungspfad (3A) der ersten Übertragungskette (A) an einer Teilnehmereinheit eingegebene Audiosignale und gegebenenfalls weitere Signale übertragen werden,
und
- bei vorhandener Übertragung von eingegebenen Audiosignalen und gegebenenfalls weiteren Signalen über den Breitband-Übertragungspfad (3A) der ersten Übertragungskette (A), die Umschalteinheit (4A) der ersten Übertragungskette (A) zum Umschalten von dem Breitband-Übertragungsinterlink zur Übertragung von Audiosignalen und gegebenenfalls weiteren Signalen aus der zweiten Übertragungskette (B) auf den Breitband-Übertragungspfad (3A) der ersten Übertragungskette (A) anzusteuern und
**dass** die Fehlererkennungseinheit (5B) der zweiten Übertragungskette (B) dazu ausgebildet ist,
- nach der Umschaltung vom Breitband-Übertragungspfad (3B) der zweiten Übertragungskette (B) auf den Breitband-Übertragungsinterlink zur Übertragung von Audiosignalen und gegebenenfalls weiteren Signalen, insbesondere PTT- und SQU-Signalen aus der ersten Übertragungskette (A) zu überprüfen, ob wieder über den Breitband-Übertragungspfad (3B) der zweiten Übertragungskette (B) an einer Teilnehmereinheit eingegebene Audiosignale und gegebenenfalls weitere Signale übertragen werden,
und
- bei vorhandener Übertragung von eingegebenen Audiosignalen und gegebenenfalls weiteren Signalen über den Breitband-Übertragungspfad (3B) der zweiten Übertragungskette (B), die Umschalteinheit (4B) der zweiten Übertragungskette (B) zum Umschalten von dem Breitband-Übertragungsinterlink zur Übertragung von Audiosignalen und gegebenenfalls weiteren Signale aus der ersten Übertragungskette (A) auf den Breitband-Übertragungspfad (3B) der zweiten Übertragungskette (B) anzusteuern.

3. Kommunikationssystem (100) nach einem der vorangehenden Ansprüche, **dadurch gekennzeichnet, dass** zumindest eine teilnehmerseitige Verarbeitungseinheit (1A) oder zumindest eine weitere Verarbeitungseinheit (2A) der ersten Übertragungskette (A) mit zumindest einer teilnehmerseitigen Verarbeitungseinheit (1B) und/oder zumindest einer weiterer Verarbeitungseinheit (2B) der zweiten Übertragungskette (B) über einen ersten Breitband-Übertragungsinterlink (31A) und einen zweiten Breitband-Übertragungsinterlink (31B) miteinander verbunden sind,
- wobei über den ersten Breitband-Übertragungsinterlink (31A) Audiosignale und gegebenenfalls weitere Signale, insbesondere PTT- und SQU-Signale, aus der ersten Übertragungskette (A) an die zweite Übertragungskette (B) weiterleitbar sind, und
- wobei über den zweiten Breitband-Übertragungsinterlink (31B) Audiosignale und gegebenenfalls weitere Signale, insbesondere PTT- und SQU-Signale, aus der zweiten Übertragungskette (B) an die erste Übertragungskette (A) weiterleitbar sind.

4. Kommunikationssystem (100) nach einem der vorangehenden Ansprüche, **dadurch gekennzeichnet, dass** zumindest eine Übertragungskette (A, B) des Kommunikationssystems (100), eine weitere Verarbeitungseinheit (2A, 2B) aufweist, wobei die weitere Verarbeitungseinheit (2A, 2B) jeweils keine Verbindungen zu Teilnehmereinheiten (T1, T2, T3) aufweist und
wobei insbesondere vorgesehen ist,
- dass die weitere Verarbeitungseinheit (2A, 2B) zumindest einen Breitband-Übertragungsinterlink aufweist, und
- dass die teilnehmerseitigen Verarbeitungseinheit (1A, 1B) einer jeweiligen Übertragungskette (A, B) jeweils mit der weiteren Verarbeitungseinheit (2A, 2B) verbunden sind.

5. Kommunikationssystem (100) nach einem der vorangehenden Ansprüche, **dadurch gekennzeichnet, dass** die Fehlererkennungseinheit (5A, 5B) jeweils dazu ausgebildet ist, bei fehlender Übertragung der eingegebenen Audiosignale und gegebenenfalls weitere Signale, insbesondere PTT- und SQU-Signale, über die jeweilige Übertragungskette (A, B) eine Fehlerinformation an die zumindest eine, einen Breitband-Übertragungsinterlink aufweisende, teilnehmerseitige Verarbeitungseinheit (1A, 1B) der jeweiligen Audioübertragungskette (A, B) und/oder die zumindest eine, einen Breitband-Übertragungsinterlink aufweisende, weitere Verarbeitungseinheit (2A, 2B) der jeweils anderen Übertragungskette (A, B), zu übermitteln.

6. Kommunikationssystem (100) nach einem derAnsprüche 3 bis 5, **dadurch gekennzeichnet, dass** über den ersten Breitband-Übertragungsinterlink (31A) und/oder den zweiten Breitband-Übertragungsinterlink (31B) jeweils
- alle Audiosignale des jeweiligen Breitband-Übertragungspfads (3A, 3B) oder
- ausgewählte Audiosignale des jeweiligen Breitband-Übertragungspfads (3A, 3B) übertragbar sind,
wobei insbesondere vorgesehen ist, dass zur Auswahl der zu übertragenden Audiosignale ein Kommunikationsprotokoll in der jeweiligen weiteren Verarbeitungseinheit (2A, 2B) hinterlegt ist.

7. Kommunikationssystem (100) nach einem der vorangehenden Ansprüche, **dadurch gekennzeichnet, dass** der zumindest eine Breitband-Übertragungsinterlink, der erste Breitband-Übertragungsinterlink (31A), der zweite Breitband-Übertragungsinterlink (31B), der Breitband-Übertragungspfad (3A) der ersten Übertragungskette (A) und/oder der Breitband-Übertragungspfad (3B) der zweiten Übertragungskette (B) jeweils als PCM-Highway ausgebildet ist.

8. Verfahren zur Übertragung von Audiosignalen und gegebenenfalls weiteren Signalen, insbesondere PTT- und/oder SQU-Signalen, zwischen zwei oder mehr Teilnehmereinheiten (T1, T2, T3) über zumindest eine erste Übertragungskette (A) und eine zweite Übertragungskette (B), mit einem Kommunikationssystem (100) gemäß einem der Ansprüche 1 bis 7,
- wobei an jeder Teilnehmereinheit (T1) an zumindest eine andere Teilnehmereinheit (T2, T3) zu übertragende Audiosignale und gegebenenfalls weitere Signale, insbesondere PTT- und SQU-Signale, eingebbar und von der zumindest einen anderen Teilnehmereinheit (T2, T3) empfangene Audiosignale abgebbar sind,
- wobei Audiosignale innerhalb einer jeweiligen Übertragungskette (A, B) über einen Breitband-Übertragungspfad (3A, 3B), insbesondere jeweils über einen PCM-Highway, übertragbar sind, und
- wobei Audiosignale zwischen der ersten Übertragungskette (A) und der zweiten Übertragungskette (B) über zumindest einen Breitband-Übertragungsinterlink übertragbar sind,
umfassend die folgenden Schritte
- Eingabe von Audiosignalen und gegebenenfalls weiteren Signalen an einer Teilnehmereinheit (T1, T2, T3) zur Übertragung über die erste Übertragungskette (A) und über die zweite Übertragungskette (B),
- Übertragen von an der Teilnehmereinheit (T1) eingegebenen Audiosignalen und gegebenenfalls weiteren Signalen über die erste Übertragungskette (A) an zumindest eine weitere Teilnehmereinheit (T2, T3),
- Überprüfen, ob die an der Teilnehmereinheit (T1) eingegebenen Audiosignale und gegebenenfalls weitere Signale über den Breitband-Übertragungspfad (3A) der ersten Übertragungskette (A) übertragen werden, und
- bei fehlender Übertragung der eingegebenen Audiosignale und gegebenenfalls weiteren Signale über den Breitband-Übertragungspfad (3A) der ersten Übertragungskette (A), Umschalten von dem Breitband-Übertragungspfad (3A) der ersten Übertragungskette (A) auf den Breitband-Übertragungsinterlink zur Übertragung von Audiosignalen und gegebenenfalls weiteren Signalen aus der zweiten Übertragungskette (B) und Übertragen von Audiosignalen und gegebenenfalls weiteren Signalen aus der zweiten Übertragungskette (B).

9. Verfahren nach Anspruch 8, **dadurch gekennzeichnet,**
- **dass** nach der Umschaltung vom Breitband-Übertragungspfad (3A) der ersten Übertragungskette (A) auf den Breitband-Übertragungsinterlink zur Übertragung von Audiosignalen und gegebenenfalls weiteren Signalen, insbesondere PTT- und SQU-Signalen, aus der zweiten Übertragungskette (B) überprüft wird, ob wieder über den Breitband-Übertragungspfad (3A) der ersten Übertragungskette (A) an einer Teilnehmereinheit eingegebene Audiosignale und gegebenenfalls weitere Signale übertragen werden, und
- **dass** bei vorhandener Übertragung von eingegebenen Audiosignalen und gegebenenfalls weiteren Signalen über den Breitband-Übertragungspfad (3A) der ersten Übertragungskette (A), von dem Breitband-Übertragungsinterlink zur Übertragung von Audiosignalen und gegebenenfalls weiteren Signalen aus der zweiten Übertragungskette (B) auf den Breitband-Übertragungspfad (3A) der ersten Übertragungskette (A) umgeschaltet wird.

10. Verfahren nach Anspruch 8 oder 9, **dadurch gekennzeichnet,**
- **dass** an einer Teilnehmereinheit (T1) eingegebene Audiosignale und gegebenenfalls weitere Signale, insbesondere PTT- und SQU-Signale, über die zweite Übertragungskette (B) an zumindest eine weitere Teilnehmereinheit (T2, T3) übertragen werden,
- **dass** überprüft wird, ob die an der Teilnehmereinheit (T1) eingegebenen Audiosignale und gegebenenfalls weitere Signale über den Breitband-Übertragungspfad (3B) der zweiten Übertragungskette (B) übertragen werden, und
- **dass** bei fehlender Übertragung der eingegebenen Audiosignale und gegebenenfalls weiteren Signale über den Breitband-Übertragungspfad (3B) der zweiten Übertragungskette (B), von dem Breitband-Übertragungspfad (3B) der zweiten Übertragungskette (B) auf den Breitband-Übertragungsinterlink zur Übertragung von Audiosignalen und gegebenenfalls weiteren Signale aus der ersten Übertragungskette (A) umgeschaltet wird und Audiosignale und gegebenenfalls weitere Signale aus der ersten Übertragungskette (A) übertragen werden.

11. Verfahren nach Anspruch 10, **dadurch gekennzeichnet,**
- **dass** nach der Umschaltung vom Breitband-Übertragungspfad (3B) der zweiten Übertragungskette (B) auf den Breitband-Übertragungsinterlink zur Übertragung von Audiosignalen und gegebenenfalls weiteren Signalen, insbesondere PTT- und SQU-Signalen, aus der ersten Übertragungskette (A) überprüft wird, ob wieder über den Breitband-Übertragungspfad (3B) der zweiten Übertragungskette (B) an einer Teilnehmereinheit eingegebene Audiosignale und gegebenenfalls weitere Signale übertragen werden, und
- **dass** bei vorhandener Übertragung von eingegebenen Audiosignalen und gegebenenfalls weiteren Signalen über den Breitband-Übertragungspfad (3B) der zweiten Übertragungskette (B), von dem Breitband-Übertragungsinterlink zur Übertragung von Audiosignalen und gegebenenfalls weiteren Signalen aus der ersten Übertragungskette (A) auf den Breitband-Übertragungspfad (3B) der zweiten Übertragungskette (B) umgeschaltet wird.

12. Verfahren nach einem der Ansprüche 8 bis 11, **dadurch gekennzeichnet, dass** bei fehlender Übertragung der eingegebenen Audiosignale und gegebenenfalls weitere Signale, insbesondere PTT- und SQU-Signale, über den Breitband-Übertragungspfad (3A, 3B) der jeweiligen Übertragungskette (A, B) eine Fehlerinformation an die Teilnehmereinheit (T1), an der Audiosignale und gegebenenfalls weitere Signale eingegeben werden und/oder die zumindest eine weitere Teilnehmereinheit (T2, T3) übermittelt wird.

13. Verfahren nach einem der Ansprüche 8 bis 12, **dadurch gekennzeichnet, dass** über einen ersten Breitband-Übertragungsinterlink (31A) und/oder einen zweiten Breitband-Übertragungsinterlink (31B) jeweils
- alle Audiosignale des jeweiligen Breitband-Übertragungspfads (3A, 3B) oder
- ausgewählte Audiosignale des jeweiligen Breitband-Übertragungspfads (3A, 3B) übertragen werden,
wobei insbesondere vorgesehen ist, dass ein vorgegebenes Kommunikationsprotokoll zur Auswahl der zu übertragenden Audiosignale herangezogen wird.

## Claims

1. Communication system (100) for transmitting audio signals and additional signals, in particular PTT and SQU signals, between two or more participating units (T1, T2, T3) via at least a first transmission chain (A) and a second transmission chain (B),
- wherein audio signals to be transmitted at each participating unit (T1, T2, T3) and where applicable additional signals, in particular PTT and SQU signals, can be input and audio signals received can be output,
- wherein each transmission chain (A, B) comprises at least one participant-side processing unit (1A, 1B) and where applicable at least one additional processing unit (2A, 2B),
- wherein each participant-side processing unit (1A, 1B) is connected to at least one participating unit (T1, T2, T3),
- wherein each participating unit (T1, T2, T3) is connected to a participant-side processing unit (1A) of the first transmission chain (A) and a participant-side processing unit (1B) of the second transmission chain (B),
- wherein the participant-side processing units (1A, 1B) of a respective transmission chain (A, B) are connected to each other via a broadband transmission path (3A, 3B) and/or to an additional processing unit (2A, 2B) of the respective transmission chain (A, B),
**characterized in that**
- at least one participant-side processing unit (1A) or at least one additional processing unit (2A) of the first transmission chain (A) is connected to at least one participant-side processing unit (2B) or at least one additional processing unit (2B) of the second transmission chain (B) via at least one broadband transmission interlink,
wherein, via the broadband transmission interlink, audio signals and where applicable additional signals can be forwarded from the first transmission chain (A) to the second transmission chain (B) and/or from the second transmission chain (B) to the first transmission chain (A), and
- **in that** this at least one participant-side processing unit (1A, 1B) having a broadband transmission interlink and/or this at least one additional processing unit (2A, 2B), which has a broadband transmission interlink, of each of the transmission chains (A, B) comprises the following:
- a switching unit (4A, 4B), wherein the switching unit (4A, 4B)
- is connected in each case to the broadband transmission path (3A, 3B) of the respective transmission chain (A, B) and the at least one broadband transmission interlink, and
- is configured to switch between the broadband transmission path (3A, 3B) of the respective transmission chain (A, B) and the broadband transmission interlink for transmitting audio signals and where applicable additional signals from the other transmission chain (A, B), respectively,
- an error detection unit (5A, 5B) which is connected to the switching unit (4A, 4B),
wherein the error detection unit (5A) of the first transmission chain (A) is configured
- to check whether audio signals input at a participating unit and where applicable additional signals, in particular PTT and SQU signals, are transmitted via the broadband transmission path (3A) of the first transmission chain (A), and,
- in the event of the input audio signals and where applicable additional signals not being transmitted via the broadband transmission path (3A) of the first transmission chain (A), to control the switching unit (4A) in order to switch from the broadband transmission path (3A) of the first transmission chain (A) to the broadband transmission interlink for transmitting audio signals and where applicable additional signals from the second transmission chain (B), and
wherein the error detection unit (5B) of the second transmission chain (B) is configured
- to check whether audio signals input at a participating unit and where applicable additional signals, in particular PTT and SQU signals, are transmitted via the broadband transmission path (3B) of the second transmission chain (B) and
- in the event of the input audio signals and where applicable additional signals not being transmitted via the broadband transmission path (3B) of the second transmission chain (B), to control the switching unit (4B) in order to switch from the broadband transmission path (3B) of the second transmission chain (B) to the broadband transmission interlink for transmitting audio signals and where applicable additional signals from the first transmission chain (A), and
- an audio processing unit (6), wherein the audio processing unit (6) is connected downstream of the switching unit (4A, 4B) so that the audio signals selected by the switching unit (4A, 4B) can be supplied to the audio processing unit (6).

2. Communication system (100) according to claim 1, **characterized in that**
the error detection unit (5A) of the first transmission chain (A) is configured
- to check whether audio signals input at a participating unit and where applicable additional signals are transmitted again via the broadband transmission path (3A) of the first transmission chain (A) after switching from the broadband transmission path (3A) of the first transmission chain (A) to the broadband transmission interlink for transmitting audio signals and where applicable additional signals, in particular PTT and SQU signals, from the second transmission chain (B),
and
- in the event of input audio signals and where applicable additional signals being transmitted via the broadband transmission path (3A) of the first transmission chain (A), to control the switching unit (4A) of the first transmission chain (A) in order to switch from the broadband transmission interlink for transmitting audio signals and where applicable additional signals from the second transmission chain (B) to the broadband transmission path (3A) of the first transmission chain (A) and
**in that** the error detection unit (5B) of the second transmission chain (B) is configured
- to check whether audio signals input at a participating unit and where applicable additional signals are transmitted again via the broadband transmission path (3B) of the second transmission chain (B) after switching from the broadband transmission path (3B) of the second transmission chain (A) to the broadband transmission interlink for transmitting audio signals and where applicable additional signals, in particular PTT and SQU signals, from the first transmission chain (A),
and
- in the event of input audio signals and where applicable additional signals being transmitted via the broadband transmission path (3B) of the second transmission chain (B), to control the switching unit (4B) of the second transmission chain (B) in order to switch from the broadband transmission interlink for transmitting audio signals and where applicable additional signals from the first transmission chain (A) to the broadband transmission path (3B) of the second transmission chain (B).

3. Communication system (100) according to either of the preceding claims, **characterized in that** at least one participant-side processing unit (1A) or at least one additional processing unit (2A) of the first transmission chain (A) is/are connected to at least one participant-side processing unit (1B) and/or at least one additional processing unit (2B) of the second transmission chain (B) via a first broadband transmission interlink (31A) and a second broadband transmission interlink (31B),
- wherein, via the first broadband transmission interlink (31A), audio signals and where applicable additional signals can be forwarded from the first transmission chain (A) to the second transmission chain (B), in particular PTT and SQU signals, and
- wherein, via the second broadband transmission interlink (31B), audio signals and where applicable additional signals can be forwarded from the second transmission chain (B) to the first transmission chain (A), in particular PTT and SQU signals.

4. Communication system (100) according to any one of the preceding claims, **characterized in that** at least one transmission chain (A, B) of the communication system (100) has an additional processing unit (2A, 2B), wherein the additional processing unit (2A, 2B) does not have any connections to participating units (T1, T2, T3), and
wherein there is in particular provision for
- the additional processing unit (2A, 2B) to have at least one broadband transmission interlink, and
- the participant-side processing unit (1A, 1B) of a respective transmission chain (A, B) to be connected to the additional processing unit (2A, 2B).

5. Communication system (100) according to any one of the preceding claims, **characterized in that** the error detection unit (5A, 5B) is configured to transmit an error information item to the at least one participant-side processing unit (1A, 1B), which has a broadband transmission interlink, of the respective audio transmission chain (A, B) and/or the at least one additional processing unit (2A, 2B), which has a broadband transmission interlink, of the other respective transmission chain (A, B), if there is no transmission of the input audio signals and where applicable additional signals, in particular PTT and SQU signals, via the respective transmission chain (A, B).

6. Communication system (100) according to any one of claims 3 to 5, **characterized in that**, via the first broadband transmission interlink (31A) and/or the second broadband transmission interlink (31B),
- all the audio signals of the respective broadband transmission path (3A, 3B) or
selected audio signals of the respective broadband transmission path (3A, 3B) can be transmitted,
wherein there is particularly provision for a communication protocol to be stored in the respective additional processing unit (2A, 2B) in order to select the audio signals to be transmitted.

7. Communication system (100) according to any one of the preceding claims, **characterized in that** the at least one broadband transmission interlink, the first broadband transmission interlink (31A), the second broadband transmission interlink (31B), the broadband transmission path (3A) of the first transmission chain (A) and/or the broadband transmission path (3B) of the second transmission chain (B) is in the form of a PCM highway.

8. Method for transmitting audio signals and where applicable additional signals, in particular PTT and/or SQU signals, between two or more participating units (T1, T2, T3) via at least a first transmission chain (A) and a second transmission chain (B), having a communication system (100) according to any one of claims 1 to 7,
- wherein, at each participating unit (T1), audio signals to be transmitted to at least one other participating unit (T2, T3) and where applicable additional signals, in particular PTT and SQU signals, can be input and audio signals received from the at least one other participating unit (T2, T3) can be output,
- wherein audio signals within a respective transmission chain (A, B) can be transmitted via a broadband transmission path (3A, 3B), in particular via a PCM highway, and
- wherein audio signals can be transmitted between the first transmission chain (A) and the second transmission chain (B) via at least one broadband transmission interlink,
comprising the following steps
- inputting audio signals and where applicable additional signals to a participating unit (T1, T2, T3) in order to transmit via the first transmission chain (A) and via the second transmission chain (B),
- transmitting audio signals which are input at the participating unit (T1) and where applicable additional signals via the first transmission chain (A) to at least one additional participating unit (T2, T3),
- checking whether the audio signals which are input at the participating unit (T1) and where applicable additional signals are transmitted via the broadband transmission path (3A) of the first transmission chain (A) and,
- in the event of the input audio signals and where applicable additional signals not being transmitted via the broadband transmission path (3A) of the first transmission chain (A), switching from the broadband transmission path (3A) of the first transmission chain (A) to the broadband transmission interlink for transmitting audio signals and where applicable additional signals from the second transmission chain (B), and transmitting audio signals and where applicable additional signals from the second transmission chain (B).

9. Method according to claim 8, **characterized in that**,
- after switching from the broadband transmission path (3A) of the first transmission chain (A) to the broadband transmission interlink for transmitting audio signals and where applicable additional signals, in particular PTT and SQU signals, from the second transmission chain (B), checking is carried out as to whether audio signals input at a participating unit and where applicable additional signals are transmitted again via the broadband transmission path (3A) of the first transmission chain (A) and,
- in the event of input audio signals and where applicable additional signals being transmitted via the broadband transmission path (3A) of the first transmission chain (A), switching is carried out from the broadband transmission interlink for transmitting audio signals and where applicable additional signals from the second transmission chain (B) to the broadband transmission path (3A) of the first transmission chain (A).

10. Method according to claim 8 or 9, **characterized in that**
- audio signals which are input at a participating unit (T1) and where applicable additional signals, in particular PTT and SQU signals, are transmitted via the second transmission chain (B) to at least one additional participating unit (T2, T3),
- **in that** checking is carried out as to whether the audio signals which are input at the participating unit (T1) and where applicable additional signals are transmitted via the broadband transmission path (3B) of the second transmission chain (B) and
- **in that**, in the event of the input audio signals and where applicable additional signals not being transmitted via the broadband transmission path (3B) of the second transmission chain (B), switching is carried out from the broadband transmission path (3B) of the second transmission chain (B) to the broadband transmission interlink for transmitting audio signals and where applicable additional signals from the first transmission chain (A), and audio signals and where applicable additional signals are transmitted from the first transmission chain (A).

11. Method according to claim 10, **characterized in that**
- checking is carried out as to whether audio signals input at a participating unit and where applicable additional signals are transmitted again via the broadband transmission path (3B) of the second transmission chain (B) after switching from the broadband transmission path (3B) of the second transmission chain (B) to the broadband transmission interlink for transmitting audio signals and where applicable additional signals, in particular PTT and SQU signals, from the first transmission chain (A), and
- **in that**, in the event of input audio signals and where applicable additional signals being transmitted via the broadband transmission path (3B) of the second transmission chain (B), switching is carried out from the broadband transmission interlink for transmitting audio signals and where applicable additional signals from the first transmission chain (A) to the broadband transmission path (3B) of the second transmission chain (B).

12. Method according to any one of claims 8 to 11, **characterized in that**, in the event of the input audio signals and where applicable additional signals not being transmitted, in particular PTT and SQU signals, an error information item is transmitted via the broadband transmission path (3A, 3B) of the respective transmission chain (A, B) to the participating unit (T1), at which audio signals and where applicable additional signals are input and/or the at least one additional participating unit (T2, T3).

13. Method according to any one of claims 8 to 12, **characterized in that** via a first broadband transmission interlink (31A) and/or a second broadband transmission interlink (31B)
- all the audio signals of the respective broadband transmission path (3A, 3B) or
- selected audio signals of the respective broadband transmission path (3A, 3B) are transmitted,
wherein there is particularly provision for a predetermined communication protocol to be used to select the audio signals to be transmitted.

## Revendications

1. Système de communication (100) pour la transmission de signaux audio et d'autres signaux, en particulier de signaux PTT et SQU, entre deux unités d'usager ou plus (T1, T2, T3) par l'intermédiaire d'au moins une première chaîne de transmission (A) et d'une seconde chaîne de transmission (B),
- dans lequel des signaux audio à transmettre à chaque unité d'usager (T1, T2, T3) et éventuellement d'autres signaux, en particulier des signaux PTT et SQU peuvent être entrés et des signaux audio reçus peuvent être émis,
- dans lequel chaque chaîne de transmission (A, B) comprend respectivement au moins une unité de traitement côté usager (1A, 1B) et éventuellement au moins une autre unité de traitement (2A, 2B),
- dans lequel chaque unité de traitement côté usager (1A, 1B) est reliée respectivement à au moins une unité d'usager (T1, T2, T3),
- dans lequel chaque unité d'usager (T1, T2, T3) est reliée respectivement à une unité de traitement côté usager (1A) de la première chaîne de transmission (A) et à une unité de traitement côté usager (1B) de la seconde chaîne de transmission (B),
- dans lequel les unités de traitement côté usager (1A, 1B) d'une chaîne de transmission respective (A, B) sont reliées entre elles par l'intermédiaire d'un chemin de transmission à large bande (3A, 3B) et/ou à une autre unité de traitement (2A, 2B) de la chaîne de transmission respective (A, B),
**caractérisé en ce que**
- au moins une unité de traitement côté usager (1A) ou au moins une autre unité de traitement (2A) de la première chaîne de transmission (A) est reliée à au moins une unité de traitement côté usager (2B) ou au moins une autre unité de traitement (2B) de la seconde chaîne de transmission (B) est reliée par l'intermédiaire d'au moins une interconnexion de transmission à large bande entre elles,
dans lequel des signaux audio et éventuellement d'autres signaux peuvent être transmis par l'intermédiaire de l'interconnexion de transmission à large bande de la première chaîne de transmission (A) à la seconde chaîne de transmission (B) et/ou de la seconde chaîne de transmission (B) à la première chaîne de transmission (A) et
- cette au moins une unité de traitement (1A, 1B) côté usager présentant une interconnexion de transmission à large bande et/ou cette au moins une autre unité de traitement (2A, 2B) présentant une interconnexion de transmission à large bande de chacune des chaînes de transmission (A, B), comprend respectivement ce qui suit :
- une unité de commutation (4A, 4B), dans lequel l'unité de commutation (4A, 4B) respectivement
- est reliée au chemin de transmission à large bande (3A, 3B) de la chaîne de transmission respective (A, B) et à l'au moins une interconnexion de transmission à large bande et
- est configurée afin de commuter entre le chemin de transmission à large bande (3A, 3B) de la chaîne de transmission respective (A, B) et l'interconnexion de transmission à large bande pour la transmission de signaux audio et éventuellement d'autres signaux de l'autre chaîne de transmission respective (A, B),
- une unité de détection d'erreur (5A, 5B) reliée à l'unité de commutation (4A, 4B),
dans lequel l'unité de détection d'erreur (5A) de la première chaîne de transmission (A) est configurée
- afin de vérifier si des signaux audio entrés et éventuellement d'autres signaux, en particulier des signaux PTT et SQU, sont transmis par l'intermédiaire du chemin de transmission à large bande (3A) de la première chaîne de transmission (A) à une unité d'usager et
- de commander en cas de transmission manquante des signaux audio entrés et éventuellement d'autres signaux par l'intermédiaire du chemin de transmission à large bande (3A) de la première chaîne de transmission (A), l'unité de commutation (4A) pour la commutation du chemin de transmission à large bande (3A) de la première chaîne de transmission (A) à l'interconnexion de transmission à large bande pour la transmission de signaux audio et éventuellement d'autres signaux de la seconde chaîne de transmission (B) et
dans lequel l'unité de détection d'erreur (5B) de la seconde chaîne de transmission (B) est configurée
- afin de vérifier si des signaux audio entrés et éventuellement d'autres signaux, en particulier des signaux PTT et SQU, sont transmis par l'intermédiaire du chemin de transmission à large bande (3B) de la seconde chaîne de transmission (B) à une unité d'usager, et
- de commander en cas de transmission manquante des signaux audio entrés et éventuellement d'autres signaux par l'intermédiaire du chemin de transmission à large bande (3B) de la seconde chaîne de transmission (B), l'unité de commutation (4B) pour la commutation du chemin de transmission à large bande (3B) de la seconde chaîne de transmission (B) à l'interconnexion de transmission à large bande pour la transmission de signaux audio et éventuellement d'autres signaux de la première chaîne de transmission (A) et
- une unité de traitement audio (6), dans lequel l'unité de traitement audio (6) est montée en aval de l'unité de commutation (4A, 4B), de sorte que les signaux audio sélectionnés par l'unité de commutation (4A, 4B) puissent être amenés à l'unité de traitement audio (6).

2. Système de communication (100) selon la revendication 1, **caractérisé en ce que**
l'unité de détection d'erreur (5A) de la première chaîne de transmission (A) est configurée
- afin de vérifier après la commutation du chemin de transmission à large bande (3A) de la première chaîne de transmission (A) à l'interconnexion de transmission à large bande pour la transmission de signaux audio et éventuellement d'autres signaux, en particulier de signaux PTT et SQU, de la seconde chaîne de transmission (B) si des signaux audio entrés et éventuellement d'autres signaux sont transmis de nouveau par l'intermédiaire du chemin de transmission à large bande (3A) de la première chaîne de transmission (A) à une unité d'usager,
et
- de commander en cas de transmission présente des signaux audio entrés et éventuellement d'autres signaux par l'intermédiaire du chemin de transmission à large bande (3A) de la première chaîne de transmission (A), l'unité de commutation (4A) de la première chaîne de transmission (A) pour la commutation de l'interconnexion de transmission à large bande pour la transmission de signaux audio et éventuellement d'autres signaux de la seconde chaîne de transmission (B) au chemin de transmission à large bande (3A) de la première chaîne de transmission (A) et
dans lequel l'unité de détection d'erreur (5A) de la seconde chaîne de transmission (B) est configurée
- afin de vérifier après la commutation du chemin de transmission à large bande (3B) de la seconde chaîne de transmission (B) à l'interconnexion de transmission à large bande pour la transmission de signaux audio et éventuellement d'autres signaux, en particulier de signaux PTT et SQU, de la première chaîne de transmission (A) si des signaux audio entrés et éventuellement d'autres signaux sont transmis de nouveau par l'intermédiaire du chemin de transmission à large bande (3B) de la seconde chaîne de transmission (B) à une unité d'usager,
et
- de commander en cas de transmission présente de signaux audio entrés et éventuellement d'autres signaux par l'intermédiaire du chemin de transmission à large bande (3B) de la seconde chaîne de transmission (B), l'unité de commutation (4B) de la seconde chaîne de transmission (B) pour la commutation de l'interconnexion de transmission à large bande pour la transmission de signaux audio et éventuellement d'autres signaux de la première chaîne de transmission (A) au chemin de transmission à large bande (3B) de la seconde chaîne de transmission (B).

3. Système de communication (100) selon l'une quelconque des revendications précédentes, **caractérisé en ce qu'**au moins une unité de traitement côté usager (1A) ou au moins une autre unité de traitement (2A) de la première chaîne de transmission (A) est reliée à au moins une unité de traitement côté usager (1B) et/ou au moins une autre unité de traitement (2B) de la seconde chaîne de transmission (B) est reliée par l'intermédiaire d'une première interconnexion de transmission à large bande (31A) et une seconde interconnexion de transmission à large bande (31B) entre elles,
- dans lequel des signaux audio et éventuellement d'autres signaux, en particulier des signaux PTT et SQU, peuvent être transmis par l'intermédiaire de la première interconnexion de transmission à large bande (31A), de la première chaîne de transmission (A) à la seconde chaîne de transmission (B) et
- dans lequel des signaux audio et éventuellement d'autres signaux, en particulier des signaux PTT et SQU, peuvent être transmis par l'intermédiaire de la seconde interconnexion de transmission à large bande (31A), de la seconde chaîne de transmission (B) à la première chaîne de transmission (A).

4. Système de communication (100) selon l'une quelconque des revendications précédentes, **caractérisé en ce qu'**au moins une chaîne de transmission (A, B) du système de communication (100) présente une autre unité de traitement (2A, 2B), dans lequel l'autre unité de traitement (2A, 2B) ne présente respectivement aucune liaison aux unités d'usager (T1, T2, T3) et
dans lequel il est en particulier prévu que
- l'autre unité de traitement (2A, 2B) présente au moins une interconnexion de transmission à large bande et
- l'unité de traitement côté usager (1A, 1B) d'une chaîne de transmission respective (A, B) est reliée respectivement à l'autre unité de traitement (2A, 2B).

5. Système de communication (100) selon l'une quelconque des revendications précédentes, **caractérisé en ce que** l'unité de détection d'erreur (5A, 5B) est configurée respectivement afin de transférer en cas de transmission manquante des signaux audio entrés et éventuellement d'autres signaux, en particulier des signaux PTT et SQU, par l'intermédiaire de la chaîne de transmission respective (A, B) une information d'erreur à la au moins une unité de traitement côté usager (1A, 1B) présentant une interconnexion de transmission à large bande de la chaîne de transmission audio (A, B) respective et/ou la au moins une autre unité de traitement (2A, B) présentant une interconnexion de transmission à large bande de l'autre chaîne de transmission respective (A, B).

6. Système de communication (100) selon l'une quelconque des revendications 3 à 5, **caractérisé en ce que** par l'intermédiaire de la première interconnexion de transmission à large bande (31A) et/ou de la seconde interconnexion de transmission à large bande (31B) respectivement,
- tous les signaux audio du chemin de transmission à large bande respectif (3A, 3B) ou
- des signaux audio sélectionnés du chemin de transmission à large bande respective (3A, 3B) peuvent être transmis,
dans lequel il est en particulier prévu qu'un protocole de communication soit enregistré dans l'autre unité de traitement (2A, 2B) respective pour la sélection des signaux audio à transmettre.

7. Système de communication (100) selon l'une quelconque des revendications précédentes, **caractérisé en ce que** la au moins une interconnexion de transmission à large bande, la première interconnexion de transmission à large bande (31A), la seconde interconnexion de transmission à large bande (31B), le chemin de transmission à large bande (3A) de la première chaîne de transmission (A) et/ou le chemin de transmission à large bande (3B) de la seconde chaîne de transmission (B) est réalisé respectivement comme ligne multiplex PCM.

8. Procédé de transmission de signaux audio et éventuellement d'autres signaux, en particulier de signaux PTT et SQU, entre deux unités d'usager ou plus (T1, T2, T3) par l'intermédiaire d'au moins une première chaîne de transmission (A) et d'une seconde chaîne de transmission (B), avec un système de communication (100) selon l'une quelconque des revendications 1 à 7,
- dans lequel des signaux audio, et éventuellement d'autres signaux, en particulier des signaux PTT et SQU, à transmettre à au moins une autre unité d'usager (T2, T3) peuvent être entrés et des signaux audio reçus par la au moins une autre unité d'usager (T2, T3) peuvent être émis au niveau de chaque unité d'usage (T1).
- dans lequel des signaux audio peuvent être transmis à l'intérieur d'une chaîne de transmission (A, B) respective par l'intermédiaire d'un chemin de transmission à large bande (3A, 3B), en particulier respectivement par l'intermédiaire d'une ligne multiplex PCM et
- dans lequel des signaux audio peuvent être transmis entre la première chaîne de transmission (A) et la seconde chaîne de transmission (B) par l'intermédiaire d'une interconnexion de transmission à large bande,
comprenant les étapes suivantes :
- l'entrée de signaux audio et éventuellement d'autres signaux au niveau d'une unité d'usager (T1, T2, T3) pour la transmission par l'intermédiaire de la première chaîne de transmission (A) et par l'intermédiaire de la seconde chaîne de transmission (B),
la transmission de signaux audio entrés au niveau de l'unité d'usager (T1) et éventuellement d'autres signaux par l'intermédiaire de la première chaîne de transmission (A) à au moins une autre unité d'usager (T2, T3),
- la vérification établissant si les signaux audio entrés au niveau de l'unité d'usager (T1) et éventuellement d'autres signaux sont transmis par l'intermédiaire du chemin de transmission à large bande (3A) de la première chaîne de transmission (A) et
- en cas de transmission manquante des signaux audio entrés et éventuellement d'autres signaux par l'intermédiaire du chemin de transmission à large bande (3A) de la première chaîne de transmission (A), la commutation du chemin de transmission à large bande (3A) de la première chaîne de transmission (A) à l'interconnexion de transmission à large bande pour la transmission de signaux audio et éventuellement d'autres signaux de la seconde chaîne de transmission (B) et la transmission de signaux audio et éventuellement d'autres signaux de la seconde chaîne de transmission (B).

9. Procédé selon la revendication 8, **caractérisé en ce que**
- une vérification est effectuée après la commutation du chemin de transmission à large bande (3A) de la première chaîne de transmission (A) à l'interconnexion de transmission à large bande pour la transmission de signaux audio et éventuellement d'autres signaux, en particulier de signaux PTT et SQU, de la seconde chaîne de transmission (B) si des signaux audio entrés et éventuellement d'autres signaux sont transmis de nouveau par l'intermédiaire du chemin de transmission à large bande (3A) de la première chaîne de transmission (A) à une unité d'usager, et
- une commutation est effectuée, en cas de transmission présente des signaux audio entrés et éventuellement d'autres signaux par l'intermédiaire du chemin de transmission à large bande (3A) de la première chaîne de transmission (A), de l'interconnexion de transmission à large bande pour la transmission de signaux audio et éventuellement d'autres signaux de la seconde chaîne de transmission (B) au chemin de transmission à large bande (3A) de la première chaîne de transmission (A).

10. Procédé selon la revendication 8 ou 9, **caractérisé en ce que**
des signaux audio entrés au niveau de l'unité usager (T1) et éventuellement d'autres signaux, en particulier des signaux PTT et SQU, sont transmis par l'intermédiaire de la seconde chaîne de transmission (B) à au moins une autre unité d'usager (T2, T3),
- une vérification est effectuée pour savoir si les signaux audio entrés au niveau de l'unité usager (T1) et éventuellement d'autres signaux sont transmis par l'intermédiaire du chemin de transmission à large bande (3B) de la seconde chaîne de transmission (B) et
- une commutation est effectuée, en cas de transmission manquante des signaux audio entrés et éventuellement d'autres signaux par l'intermédiaire du chemin de transmission à large bande (3B) de la seconde chaîne de transmission (B), du chemin de transmission à large bande (3B) de la seconde chaîne de transmission (B) à l'interconnexion de transmission à large bande pour la transmission de signaux audio et éventuellement d'autres signaux de la première chaîne de transmission (A), et des signaux audio et éventuellement d'autres signaux de la première chaîne de transmission (A) sont transmis.

11. Procédé selon la revendication 10, **caractérisé en ce que**
- une vérification est effectuée après la commutation du chemin de transmission à large bande (3B) de la seconde chaîne de transmission (B) à l'interconnexion de transmission à large bande pour la transmission de signaux audio et éventuellement d'autres signaux, en particulier de signaux PTT et SQU, de la première chaîne de transmission (A) si des signaux audio entrés et éventuellement d'autres signaux sont transmis de nouveau par l'intermédiaire du chemin de transmission à large bande (3B) de la seconde chaîne de transmission (B) à une unité d'usager, et
- une commutation est effectuée en cas de transmission présente des signaux audio entrés et éventuellement d'autres signaux par l'intermédiaire du chemin de transmission à large bande (3B) de la seconde chaîne de transmission (B), de l'interconnexion de transmission à large bande pour la transmission de signaux audio et éventuellement d'autres signaux de la première chaîne de transmission (A) au chemin de transmission à large bande (3B) de la seconde chaîne de transmission (B).

12. Procédé selon l'une quelconque des revendications 8 à 11, **caractérisé en ce qu'**en cas de transmission manquante des signaux audio entrés et éventuellement d'autres signaux, en particulier des signaux PTT et SQU, une information d'erreur est transmise à l'unité d'usager (T1), au niveau de laquelle des signaux audio et éventuellement d'autres signaux sont entrés, et/ou à la au moins une autre unité d'usager (T2, T3) par l'intermédiaire du chemin de transmission à large bande (3A, 3B) de la chaîne de transmission (A, B) respective.

13. Procédé selon l'une quelconque des revendications 8 à 12, **caractérisé en ce que** par l'intermédiaire d'une première interconnexion de transmission à large bande (31A) et/ou d'une seconde interconnexion de transmission à large bande (31B) respectivement
- tous les signaux audio du chemin de transmission à large bande respectif (3A, 3B) ou
- des signaux audio sélectionnés du chemin de transmission à large bande respective (3A, 3B) sont transmis,
dans lequel il est en particulier prévu qu'un protocole de communication prédéfini soit utilisé pour la sélection des signaux audio à transmettre.
